(19) **Europäisches Patentamt**
**European Patent Office**
**Office européen des brevets**

(11) **EP 4 588 620 A1**

(12) **EUROPEAN PATENT APPLICATION**

(43) Date of publication:
**23.07.2025 Bulletin 2025/30**

(21) Application number: **25152946.7**

(22) Date of filing: **20.01.2025**

(51) International Patent Classification (IPC):
**B25F 5/00** *(2006.01)*

(52) Cooperative Patent Classification (CPC):
**B25F 5/00**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **19.01.2024 US 202463622837 P**

(71) Applicant: **Milwaukee Electric Tool Corporation Brookfield, WI 53005 (US)**

(72) Inventors:
- **Palm, Andrew R.**
  **Glendale, 53217 (US)**
- **Hodson, Robert P.**
  **Hartford, 53027 (US)**
- **Zhao, Dapeng**
  **Franksville, 53126 (US)**
- **Abbott, Jonathan E.**
  **Milwaukee, 53222 (US)**

(74) Representative: **Barker Brettell LLP**
**100 Hagley Road**
**Edgbaston**
**Birmingham B16 8QQ (GB)**

(54) **POWER TOOL IMPLEMENTING MACHINE LEARNING TO CONTROL THE POWER TOOL**

(57)    A power tool (500) includes a housing and a sensor (530), a machine learning controller (540), a motor (505), and an electronic controller (550) supported by the housing. The sensor is configured to generate sensor data indicative of an operational parameter of the power tool. The electronic controller includes an electronic processor (550) and a memory. The memory includes a machine learning control program. The electronic controller is configured to receive the sensor data. The sensor data includes a motor speed of the motor, a motor current of the motor, and a motion characteristic of the power tool. The electronic controller is configured to process the sensor data using the machine learning control program and generate an output based on the sensor data. The output can include an identified type of application that is being performed by the power tool.

*FIG. 5A*

EP 4 588 620 A1

**Description**

RELATED APPLICATIONS

This application claims priority to U.S. Provisional Application No. 63/622,837, filed on January 19, 2024, titled "POWER TOOL IMPLEMENTING MACHINE LEARNING TO CONTROL THE POWER TOOL," which is hereby incorporated by reference in its entirety.

FIELD

Embodiments described herein related to the control of power tools.

SUMMARY

One example provided herein includes a power tool. The power tool includes a housing, a trigger, a motor, a battery pack interface, a sensor, and an electronic control assembly. The motor is supported by the housing. The battery pack interface is configured to receive a battery pack. The sensor is support by the housing and configured to generate sensor data associated with the power tool. The sensor data indicates a distance of the power tool in relation to an object. The electronic control assembly includes a processor and a memory and is supported by the housing and connected to the motor. The electronic control assembly is configured to receive the sensor data and processor the sensor data using a machine learning control program executed on the processor. Using the machine learning control program, an output is generated based on the sensor data. The motor is controlled based on the output.

One example provided herein includes a method of operating a power tool. The method includes a sensor of the power tool generating sensor data associated with the power tool. The sensor data indicates a distance of the power tool in relation to an object. An electronic control assembly of the power tool receives the sensor data. The electronic control assembly includes a memory, and a processor configured to execute instructions stored on the memory. The electronic control assembly processes the sensor data using a machine learning control program executed on the electronic control assembly. The machine learning model generates an output based on the sensor data. The electronic control assembly controls a motor of the power tool based on the output.

One example provided herein includes a power tool. The power tool includes a housing, a motor, a battery pack interface, a sensor, and an electronic control assembly. The motor is supported by the housing. The battery pack interface is configured to receive a battery pack. The sensor is supported by the housing and is configured to generate sensor data associated with the power tool. The electronic control assembly includes a processor and a memory and is supported by the housing and connected to the motor. The electronic control assembly is configured to receive the sensor data and processor the sensor data using a machine learning control program executed on the processor. Using the machine learning control program, a classification of a power tool operation is determined based on the sensor data. The motor is controlled based on the classification.

One example provided herein includes a method of operating a power tool. The method includes a sensor of the power tool generating sensor data associated with the power tool. An electronic control assembly of the power tool receives the sensor data. The electronic control assembly includes a memory, and a processor configured to execute instructions stored on the memory. The electronic control assembly processes the control data using a machine learning control program executed on the electronic control assembly. A classification of a power tool operation is determined using the machine learning program, based on the sensor data. A motor of the power tool is controlled based on the classification.

Power tools described herein include a housing and a sensor, a machine learning controller, a motor, a battery pack, and an electronic controller supported by the housing. The sensor is configured to generate sensor data indicative of an operational parameter of the power tool. The battery pack interface configured to receive a battery pack. The electronic controller includes an electronic processor and a memory. The memory includes a machine learning control program for execution by the electronic processor. The electronic controller is configured to receive the sensor data. The sensor data includes a motor speed of the motor, a motor current of the motor, and a motion characteristic of the power tool. The electronic controller is also configured to process the sensor data using the machine learning control program. The electronic controller is also configured to generate an output based on the sensor data. The output includes an identified type of application that is being performed by the power tool.

Power tools described herein include a housing and a sensor, a machine learning controller, a motor, a battery pack, and an electronic controller supported by the housing. The sensor is configured to generate sensor data indicative of an operational parameter of the power tool. The battery pack interface configured to receive a battery pack. The electronic controller includes an electronic processor and a memory. The memory includes a machine learning control program for execution by the electronic processor. The electronic controller is configured to receive the sensor data. The sensor data includes a motor speed of the motor, a motor current of the motor, and a motion characteristic of the power tool. The electronic controller is also configured to process the sensor data using the machine learning control program. The electronic controller is also configured to generate an output based on the sensor data. The output includes an identified type of fastener that is being driven by the power tool.

Power tools described herein include a housing and a sensor, a machine learning controller, a motor, a battery pack, and an electronic controller supported by the housing. The sensor is configured to generate sensor data indicative of an operational parameter of the power tool. The battery pack interface configured to receive a battery pack. The electronic controller includes an electronic processor and a memory. The memory includes a machine learning control program for execution by the electronic processor. The electronic controller is configured to receive the sensor data. The sensor data includes a motor speed of the motor, a motor current of the motor, and a motion characteristic of the power tool. The electronic controller is also configured to process the sensor data using the machine learning control program. The electronic controller is also configured to generate an output based on the sensor data. The output includes an identified type of material into which a fastener is being driven by the power tool.

Method described herein for operating a power tool include generating, by a plurality of sensors, sensor data indicative of operational parameters of the power tool. The methods further include receiving, by an electronic controller of the power tool, the sensor data. The methods further include processing, by the electronic processor, the sensor data using a machine learning control program. The methods also include generating, using the machine learning control program, an output based on the sensor data. The output includes an identified type of application that is being performed by the power tool. The methods further include controlling, by the electronic controller, a motor of the power tool based on the output.

Methods described herein for operating a power tool include generating, by a plurality of sensors, sensor data indicative of operational parameters of the power tool. The methods further include receiving, by an electronic controller of the power tool, the sensor data. The methods further include processing, by the electronic processor, the sensor data using a machine learning control program. The methods also include generating, using the machine learning control program, an output based on the sensor data. The output includes an identified type of fastener that is being driven by the power tool. The methods further include controlling, by the electronic controller, a motor of the power tool based on the output.

Methods described herein for operating a power tool include generating, by a plurality of sensors, sensor data indicative of operational parameters of the power tool. The methods further include receiving, by an electronic controller of the power tool, the sensor data. The methods further include processing, by the electronic processor, the sensor data using a machine learning control program. The methods also include generating, using the machine learning control program, an output based on the sensor data. The output includes an identified type of material into which a fastener is being driven by the power tool. The methods further include controlling, by the electronic controller, a motor of the power tool based on the output.

Power tool systems described herein include a housing and a sensor, a motor, and a machine learning controller. The sensor is configured to generate sensor data indicative of an operational parameter of the power tool. The motor positioned within the housing. The machine learning controller connected to the sensor. The machine learning controller is configured to receive the sensor data. The sensor data includes a motor speed of the motor, a motor current of the motor, and a motion characteristic of the power tool. The machine learning controller is also configured to process the sensor data using a machine learning control program. The machine learning controller is also configured to generate, using the machine learning control program, an output based on the sensor data. The output includes an identified type of application that is being performed by the power tool.

Power tool systems described herein include a housing and a sensor, a motor, and a machine learning controller. The sensor is configured to generate sensor data indicative of an operational parameter of the power tool. The motor positioned within the housing. The machine learning controller connected to the sensor. The machine learning controller is configured to receive the sensor data. The sensor data includes a motor speed of the motor, a motor current of the motor, and a motion characteristic of the power tool. The machine learning controller is also configured to process the sensor data using a machine learning control program. The machine learning controller is also configured to generate, using the machine learning control program, an output based on the sensor data. The output includes an identified type of fastener that is being driven by the power tool.

Power tool systems described herein include a housing and a sensor, a motor, and a machine learning controller. The sensor is configured to generate sensor data indicative of an operational parameter of the power tool. The motor positioned within the housing. The machine learning controller connected to the sensor. The machine learning controller is configured to receive the sensor data. The sensor data includes a motor speed of the motor, a motor current of the motor, and a motion characteristic of the power tool. The machine learning controller is also configured to process the sensor data using a machine learning control program. The machine learning controller is also configured to generate, using the machine learning control program, an output based on the sensor data. The output includes an identified type of material into which a fastener is being driven by the power tool.

External system devices described herein communicate with a power tool. An external system device includes a transceiver for communicating with the power tool and a machine learning controller in communication with the transceiver. The machine learning controller includes an electronic processor and a memory, and is configured to receive, via the transceiver, sensor data indicative of an operational parameter of the power tool. The sensor data includes a motor speed of the motor, a motor current of the motor, and a motion characteristic of the power tool. The machine learning controller is further configured to train a machine learning control program using the sensor data to generate a trained machine learning control program. The trained machine learning control program is configured to be executed by the power tool to generate an output based on the sensor data, the output including an identified type of application that is being performed by the power tool. The machine learning controller is further configured to transmit, via the transceiver, the trained machine learning control program to the power tool.

External system devices described herein communicate with a power tool. An external system device includes a transceiver for communicating with the power tool and a machine learning controller in communication with the transceiver. The machine learning controller includes an electronic processor and a memory, and is configured to receive, via the transceiver, sensor data indicative of an operational parameter of the power tool. The sensor data includes a motor speed of the motor, a motor current of the motor, and a motion characteristic of the power tool. The machine learning controller is further configured to train a machine learning control program using the sensor data to generate a trained machine learning control program. The trained machine learning control program is configured to be executed by the power tool to generate an output based on the sensor data, the output including an identified type of fastener that is being driven by the power tool. The machine learning controller is further configured to transmit, via the transceiver, the trained machine learning control program to the power tool.

External system devices described herein communicate with a power tool. An external system device includes a transceiver for communicating with the power tool and a machine learning controller in communication with the transceiver. The machine learning controller includes an electronic processor and a memory, and is configured to receive, via the transceiver, sensor data indicative of an operational parameter of the power tool. The sensor data includes a motor speed of the motor, a motor current of the motor, and a motion characteristic of the power tool. The machine learning controller is further configured to train a machine learning control program using the sensor data to generate a trained machine learning control program. The trained machine learning control program is configured to be executed by the power tool to generate an output based on the sensor data, the output including an identified type of material into which a fastener is being driven by the power tool. The machine learning controller is further configured to transmit, via the transceiver, the trained machine learning control program to the power tool.

Before any embodiments are explained in detail, it is to be understood that the embodiments are not limited in application to the details of the configurations and arrangements of components set forth in the following description or illustrated in the accompanying drawings. The embodiments are capable of being practiced or of being carried out in various ways. Also, it is to be understood that the phraseology and terminology used herein are for the purpose of description and should not be regarded as limiting. The use of "including," "comprising," or "having" and variations thereof are meant to encompass the items listed thereafter and equivalents thereof as well as additional items. Unless specified or limited otherwise, the terms "mounted," "connected," "supported," and "coupled" and variations thereof are used broadly and encompass both direct and indirect mountings, connections, supports, and couplings.

In addition, it should be understood that embodiments may include hardware, software, and electronic components or modules that, for purposes of discussion, may be illustrated and described as if the majority of the components were implemented solely in hardware. However, one of ordinary skill in the art, and based on a reading of this detailed description, would recognize that, in at least one embodiment, the electronic-based aspects may be implemented in software (e.g., stored on non-transitory computer-readable medium) executable by one or more processing units, such as a microprocessor and/or application specific integrated circuits ("ASICs"). As such, it should be noted that a plurality of hardware and software based devices, as well as a plurality of different structural components, may be utilized to implement the embodiments. For example, "servers," "computing devices," "controllers," "processors," etc., described in the specification can include one or more processing units, one or more computer-readable medium modules, one or more input/output interfaces, and various connections (e.g., a system bus) connecting the components.

Relative terminology, such as, for example, "about," "approximately," "substantially," etc., used in connection with a quantity or condition would be understood by those of ordinary skill to be inclusive of the stated value and has the meaning dictated by the context (e.g., the term includes at least the degree of error associated with the measurement accuracy, tolerances [e.g., manufacturing, assembly, use, etc.] associated with the particular value, etc.). Such terminology should also be considered as disclosing the range defined by the absolute values of the two endpoints. For example, the expression "from about 2 to about 4" also discloses the range "from 2 to 4". The relative terminology may refer to plus or minus a percentage (e.g., 1%, 5%, 10%, or more) of an indicated value.

It should be understood that although certain drawings illustrate hardware and software located within particular devices, these depictions are for illustrative purposes only. Functionality described herein as being performed by one component may be performed by multiple components in a distributed manner. Likewise, functionality performed by multiple components may be consolidated and performed by a single component. In some embodiments, the illustrated components may be combined or divided into separate software, firmware and/or hardware. For example, instead of being located within and performed by a single electronic processor, logic and processing may be distributed among multiple electronic processors. Regardless of how they are combined or divided, hardware and software components may be located on the same computing device or may be distributed among different computing devices connected by one or more networks or other suitable communication links. Similarly, a component described as performing particular functionality may also perform additional functionality not described herein. For example, a device or structure that is "configured" in a certain way is configured in at least that way but may also be configured in ways that are not explicitly listed. Features which are described in the context of separate aspects and/or embodiments of the invention may be used together and/or be interchangeable wherever possible. Similarly, where features are, for brevity, described in the context of a single embodiment, those features may also be provided separately or in any suitable sub-combination. Features described in connection with the power tool may have corresponding features definable and/or combinable with respect to a method or vice versa, and these embodiments are specifically envisaged.

BRIEF DESCRIPTION OF THE DRAWINGS

FIG. 1 illustrates a power tool system according to embodiments described herein.

FIG. 2 illustrates a power tool system according to embodiments described herein.

FIG. 3 illustrates a power tool system according to embodiments described herein.

FIGS. 4A-B illustrate a power tool system according to embodiments described herein.

FIG. 4C illustrates a power tool system according to embodiments described herein.

FIG. 4D illustrates a power tool system according to embodiments described herein.

FIG. 5A is a block diagram of an example power tool of the power tool systems of FIGS. 1-4C.

FIG. 5B is a block diagram of a machine learning controller of the power tool of FIG. 5A.

FIG. 6 is a flowchart illustrating a method of building and implementing a machine learning controller for the power tool of FIG. 5A.

FIG. 7 is a flowchart illustrating a method of operating the power tool of FIG. 5A according to the machine learning controller.

FIG. 8 illustrates graphs that depict usage information used to train the machine learning controller of the power tool of FIG. 5A.

FIG. 9 is a schematic diagram of various types of information that may be utilized by the machine learning controller of the power tool of FIG. 5A.

FIG. 10 illustrates a logistic regression curve that may be utilized by the machine learning controller of the power tool of FIG. 5A.

FIG. 11 is a flowchart illustrating a method of identifying a type of application of the power tool of FIG. 5A using the machine learning controller of the power tool of FIG. 5A.

FIG. 12 is a flowchart illustrating a method of identifying a type of fastener being driven by the power tool of FIG. 5A using the machine learning controller of the power tool of FIG. 5A.

FIG. 13 is a flowchart illustrating a method of identifying a type of material of a workpiece associated with the power tool of FIG. 5A using the machine learning controller of the power tool of FIG. 5A.

FIG. 14 is a schematic diagram of distance measuring system that may be utilized by the machine learning controller of the power tool of FIG. 5A.

FIG. 15 is a flowchart illustrating a method of determining a position of the power tool of FIG. 5A using the machine learning controller of the power tool of FIG. 5A.

DETAILED DESCRIPTION

Embodiments described herein include various systems in which a machine learning controller is implemented to control a feature or function of the power tool. For example, the machine learning controller can be used by a power tool to determine a particular application of the power tool (e.g., high-torque application, low-torque application, etc.), a type of fastener being driven by the power tool (e.g., a deck screw, a ledgerlok, etc.), a material into which a fastener is being driven (e.g., a hard material, a soft material, etc.), a distance that the power tool has travelled (e.g., such that a fastener is flush with a surface), and the like. After such determinations have been made, the power tool is configured to modify operation of the power tool in some manner. For example, the power tool can implement field weakening motor control in high-torque applications, when particular fasteners are being driven, and/or when driving a fastener into a hard material.

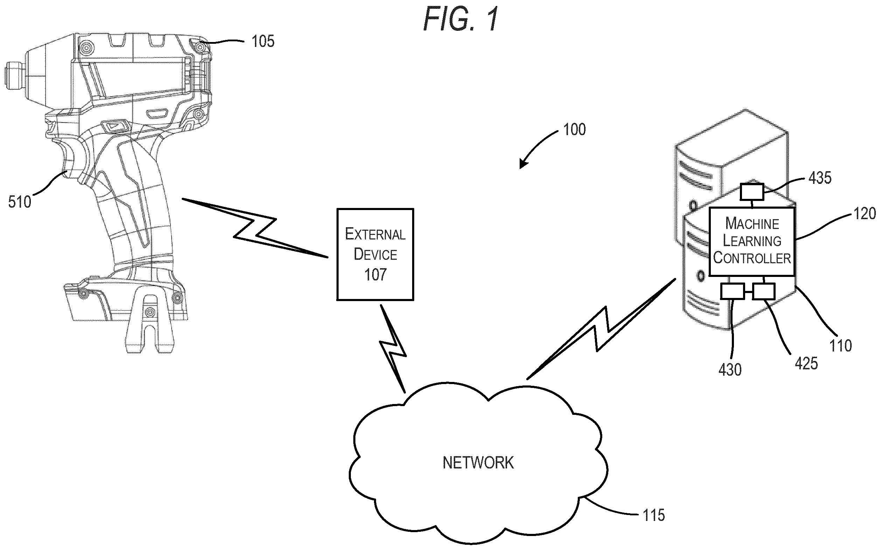

FIG. 1 illustrates a first power tool system 100. The first power tool system 100 includes a power tool 105, an external device 107, a server 110, and a network 115. The power tool 105 includes various sensors and devices that collect usage information during the operation of the power tool 105. The usage information may alternatively be referred to as operational information of the power tool 105, and refers to, for example, data regarding the operation of the motor (e.g., speed, position, acceleration, temperature, usage time, and the like), the operating mode of the power tool 105 (e.g., driving mode, impact mode, operation time in each mode, frequency of operation in each mode, and the like), conditions encountered during operation (e.g., overheating of the motor, motor current, number of rotations, magnitude of vibration, power tool position, and the like), and other aspects (e.g., state of charge of the battery, rate of discharge, and the like). In some embodiments, the usage information collected during the operation of the power tool 105 includes power consumption of the power tool 105. The power consumption of the power tool 105 may be determined using the state of charge of the battery pack (e.g., battery voltage) and a rate of discharge of the battery (e.g., current amperage). In some implementations, the power consumption of the power tool 105 may be determined as function of distance traveled into a workpiece. For example, the power consumption of the power tool 105 can be a numerical integration of an output (e.g., speed measurements) of an inertial measurement unit ("IMU") of the power tool 105.

Although the methods described herein may be described with respect to the power tool 105 as illustrated, in some embodiments, the methods are implemented by other examples of the power tool 105, such as a circular saw, a jigsaw, a reciprocating saw, a bandsaw, a grinder, a cutoff saw, a tire buffer, a mud mixer, a bandfile, a polisher, a sander, a cutoff tool, a rotary hammer, a drill-driver, a hammer drill, a right angle drill, an impact driver, an impact wrench, a ratchet, a screwdriver, a crimper, a pipe threader, a pump, a cable cutter, a cable stripper, a rod cutter, a tube cutter, a pipe shear, a knockout tool, a PEX expander, an inflator, a compressor, a sewer drum, a transfer pump, a drain snake, a rivet tool, a heat gun, a grease gun, a caulk gun, a chain hoist, a track saw, a miter saw, a table saw, a multi-tool, a router, a planer, a vacuum, a fan, a blower, etc.

In the illustrated embodiment, the power tool 105 communicates with the external device 107. The external device 107 may include, for example, a smartphone, a tablet computer, a cellular phone, a laptop computer, a smart watch, and the like. The power tool 105 communicates with the external device 107, for example, to transmit at least a portion of the usage information for the power tool 105, to receive configuration information for the power tool 105, or a combination thereof. In some embodiments, the external device may include a short-range transceiver to communicate with the power tool 105, and a long-range transceiver to communicate with the server 110. In the illustrated embodiment, the power tool 105 also includes a transceiver to communicate with the external device via, for example, a short-range communication protocol such as BLUETOOTH ®. In some embodiments, the external device 107 bridges the communication between the power tool 105 and the server 110. That is, the power tool 105 transmits operational data to the external device 107, and the external device 107 forwards the operational data from the power tool 105 to the server 110 over the network 115. The network 115 may be a long-range wireless network such as the Internet, a local area network ("LAN"), a wide area network ("WAN"), or a combination thereof. In other embodiments, the network 115 may be a short-range wireless communication network, and in yet other embodiments, the network 115 may be a wired network using, for example, USB cables. Similarly, the server 110 may transmit information to the external device 107 to be forwarded to the power tool 105. In some embodiments, the power tool 105 is equipped with a long-range transceiver instead of or in addition to the short-range transceiver. In such embodiments, the power tool 105 communicates directly with the server 110. In some embodiments, the power tool 105 may communicate directly with both the server 110 and the external device 107. In such embodiments, the external device 107 may, for example, generate a graphical user interface to facilitate control and programming of the power tool 105, while the server 110 may store and analyze larger amounts of operational data for future programming or operation of the power tool 105. In other embodiments, however, the power tool 105 may communicate directly with the server 110 without utilizing a short-range communication protocol with the external device 107.

The server 110 includes a server electronic control assembly having a server electronic processor 425, a server memory 430, a transceiver 435, and a machine learning controller 120. The transceiver 435 allows the server 110 to communicate with the power tool 105, the external device 107, or both. The server electronic processor 425 receives tool usage data from the power tool 105 (e.g., via the external device 107), stores the received tool usage data in the server memory 430, and, in some embodiments, uses the received tool usage data for building or adjusting a machine learning controller 120.

The machine learning controller 120 implements a machine learning program. The machine learning controller 120 is configured to construct a model (e.g., building one or more algorithms) based on example inputs. Supervised learning involves presenting a computer program with example inputs and their actual outputs (e.g., categorizations). The machine learning controller 120 is configured to learn a general rule or model that maps the inputs to the outputs based on the provided example input-output pairs. The machine learning algorithm may be configured to perform machine learning using various types of methods. For example, the machine learning controller 120 may implement the machine learning program using decision tree learning, associates rule learning, artificial neural networks, recurrent artificial neural networks, long short term memory neural networks, inductive logic programming, support vector machines, clustering, Bayesian networks, reinforcement learning, representation learning, similarity and metric learning, sparse dictionary learning, genetic algorithms, k-nearest neighbor (KNN), among others, such as those listed in Table 1 below.

| Table 1 | |
|---|---|
| Recurrent Models | Recurrent Neural Networks ["RNNs"], Long Short-Term Memory ["LSTM"] models, Gated Recurrent Unit ["GRU"] models, Markov Processes, Reinforcement learning |
| Non-Recurrent Models | Deep Neural Network ["DNN"], Convolutional Neural Network ["CNN"], Support Vector Machines ["SVM"], Anomaly detection (ex: Principle Component Analysis ["PCA"]), logistic regression, decision trees/forests, ensemble methods (combining models), polynomial/Bayesian/other regressions, Stochastic Gradient Descent ["SGD"], Linear Discriminant Analysis ["LDA"], Quadratic Discriminant Analysis ["QDA"], Nearest neighbors classifications/regression, naive Bayes, etc. |

The machine learning controller 120 is programmed and trained to perform a particular task. For example, in some embodiments, the machine learning controller 120 is trained to identify an application for which the power tool 105 is used (e.g., for installing drywall). The task for which the machine learning controller 120 is trained may vary based on, for example, the type of power tool, a selection from a user, typical applications for which the power tool is used, and the like. Analogously, the way in which the machine learning controller 120 is trained also varies based on the particular task. In particular, the training examples used to train the machine learning controller may include different information and may have different dimensions based on the task of the machine learning controller 120. In the example mentioned above in which the machine learning controller 120 is configured to identify a use application of the power tool 105, each training example may include a set of inputs such as motor speed (e.g., number of rotations per minute [RPM], motor current and voltage, an operating mode or application currently being implemented by the power tool 105, and movement of the power tool 105 [e.g., from an accelerometer] and/or position of the power tool 105 [e.g., from an inertial measurement unit (IMU)]). Each training example also includes a specified output. For example, when the machine learning controller 130 identifies the use application of the power tool 105, a training example may have an output that includes a particular use application of the power tool 105, such as, for example, fastener identification, material identification (e.g., workpiece identification), accessory identification, application identification, etc. Other training examples, including different values for each of the inputs and an output indicating that the use application is, for example, installing screws on a wooden workpiece. The training examples may be previously collected training examples, from for example, a plurality of the same type of power tools. For example, the training examples may have been previously collected from, for example, two hundred power tools of the same type (e.g., drills) over a span of, for example, one year.

A plurality of different training examples is provided to the machine learning controller 120. The machine learning controller 120 uses these training examples to generate a model (e.g., a rule, a set of equations, and the like) that helps categorize or estimate the output based on new input data. The machine learning controller 120 may weigh different training examples differently to, for example, prioritize different conditions or outputs from the machine learning controller 120. For example, a training example corresponding to a kickback condition may be weighted more heavily than a training example corresponding to a stripping condition to prioritize the correct identification of the kickback condition relative to the stripping condition. In some embodiments, the training examples are weighted differently by associating a different cost function or value to specific training examples or types of training examples.

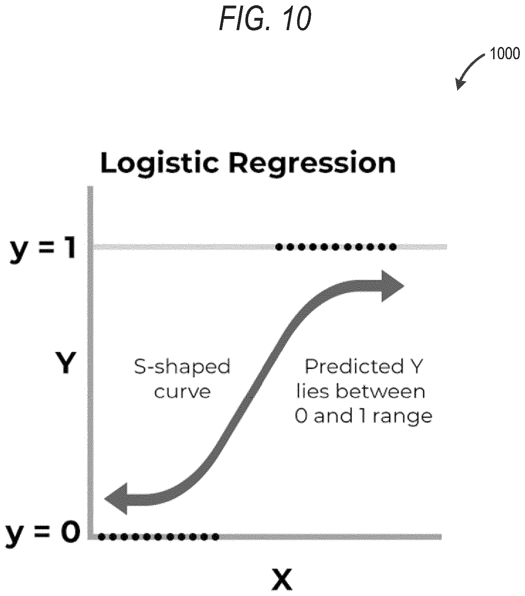

In some embodiments, the machine learning controller 120 implements a logistic regression algorithm to perform classification and/or estimation tasks. A logistic regression estimates parameters (e.g., the coefficients in a linear combination) of a logistic model. The logistic model is a statistical model that models a probability of an event taking place by having the log-odds for the event be a linear combination of one or more independent variables. The logistic function is a function that converts log-odds to a probability. In some instances, a sigmoid function is the function that converts the linear combination to a probability, as described in more detail below with respect to FIG. 10. The machine learning controller 120 may, for example, classify a fastener type, material type, power tool accessory type, and/or power tool application type based on power tool characteristics (e.g., current draw, RPM, and IMU magnitude) input into the logistic regression algorithm.

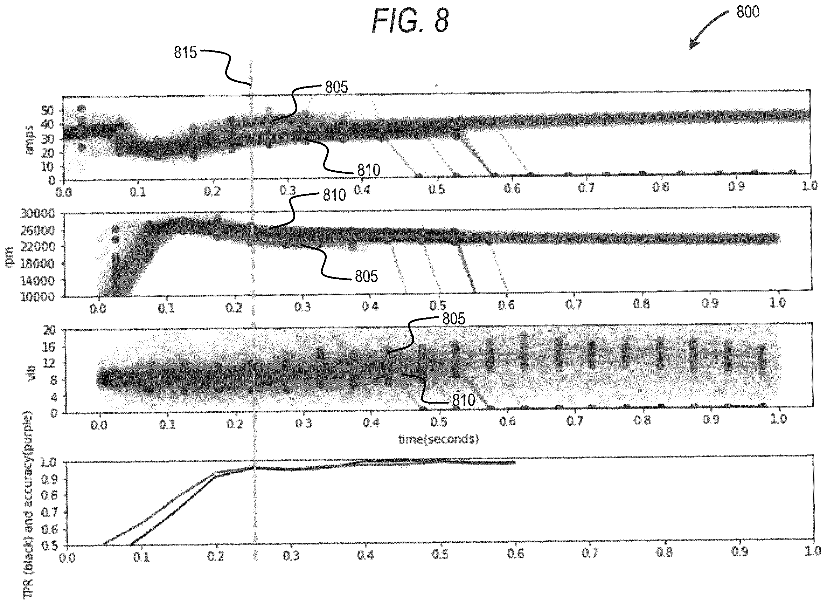

The training samples for the logistic regression algorithm can include, for example, a set of independent input variables (e.g., current draw, RPMs, and IMU vibration magnitude, as described in more detail below with respect to FIG. 8) and an output classification. For example, the classification can be related to fasteners (e.g., "Class 0" represents a 3" deck screw and "Class 1" represents a 5" ledger-lok). During training, the logistic regression algorithm learns a mapping between the input variables and the expected output. In some embodiments, the logistic regression algorithm may be able to define a line or hyperplane that accurately separates the output classifications. After the logistic regression algorithm has been trained, new input data can be compared to the line or hyperplane to determine how to classify the new input data. In other embodiments, as mentioned above, the machine learning controller 120 can implement different machine learning algorithms to make an estimation or classification based on a set of input data.

In some embodiments, the machine learning controller 120 implements an artificial neural network. The artificial neural network typically includes an input layer, a plurality of hidden layers or nodes, and an output layer. Typically, the input layer includes as many nodes as inputs provided to the machine learning controller 120. As described above, the number (and the type) of inputs provided to the machine learning controller 120 may vary based on the particular task for the machine learning controller 120. Accordingly, the input layer of the artificial neural network of the machine learning controller 120 may have a different number of nodes based on the particular task for the machine learning controller 120. The input layer connects to the hidden layers. The number of hidden layers varies and may depend on the particular task for the machine learning controller 120. Additionally, each hidden layer may have a different number of nodes and may be connected to the next layer differently. For example, each node of the input layer may be connected to each node of the first hidden layer. The connection between each node of the input layer and each node of the first hidden layer may be assigned a weight parameter. Additionally, each node of the neural network may also be assigned a bias value. However, each node of the first hidden layer may not be connected to each node of the second hidden layer. That is, there may be some nodes of the first hidden layer that are not connected to all of the nodes of the second hidden layer. The connections between the nodes of the first hidden layers and the second hidden layers are each assigned different weight parameters. Each node of the hidden layer is associated with an activation function. The activation function defines how the hidden layer is to process the input received from the input layer or from a previous input layer. These activation functions may vary and be based on not only the type of task associated with the machine learning controller 120, but may also vary based on the specific type of hidden layer implemented.

Each hidden layer may perform a different function. For example, some hidden layers can be convolutional hidden layers which can, in some instances, reduce the dimensionality of the inputs, while other hidden layers can perform more statistical functions such as max pooling, which may reduce a group of inputs to the maximum value, an averaging layer, among others. In some of the hidden layers (also referred to as "dense layers"), each node is connected to each node of the next hidden layer. Some neural networks including more than, for example, three hidden layers may be considered deep neural networks. The last hidden layer is connected to the output layer. Similar to the input layer, the output layer typically has the same number of nodes as the possible outputs. In the example above in which the machine learning controller 120 identifies a use application of the power tool 105, the output layer may include, for example, four nodes. A first node may indicate that the use application corresponds to a high torque application, a second node may indicate that the use application corresponds to a deck screw (e.g., fastener type), a third node may indicate that the use application corresponds to installing a screw in a wooden workpiece, and the fourth node may indicate that the use application corresponds to an unknown (or unidentifiable) task. In some embodiments, the machine learning controller 120 then selects the output node with the highest value and indicates to the power tool 105 or to the user the corresponding use application. In some embodiments, the machine learning controller 120 may also select more than one output node. The machine learning controller 120 or the electronic processor 550 may then use the multiple outputs to control the power tool 500. For example, the machine learning controller 120 may identify the type of fastener and select a self-sinking screw and a sheet metal screw as the most likely candidates for the fastener. The machine learning controller 120 or the electronic processor 550 may then, for example, control the motor according to the speed for a self-sinking screw. The machine learning controller 120 and the electronic processor 550 may implement different methods of combining the outputs from the machine learning controller 120.

During training, the artificial neural network receives the inputs for a training example and generates an output using the bias for each node, and the connections between each node and the corresponding weights. The artificial neural network then compares the generated output with the actual output of the training example. Based on the generated output and the actual output of the training example, the neural network changes the weights associated with each node connection. In some embodiments, the neural network also changes the weights associated with each node during training. The training continues until a training condition is met. The training condition may correspond to, for example, a predetermined number of training examples being used, a minimum accuracy threshold being reached during training and validation, a predetermined number of validation iterations being completed, and the like. Different types of training algorithms can be used to adjust the bias values and the weights of the node connections based on the training examples. The training algorithms may include, for example, gradient descent, newton's method, conjugate gradient, quasi newton, levenberg marquardt, among others, see again Table 1.

In some embodiments, the machine learning controller 120 implements a support vector machine to perform classification. The machine learning controller 120 may, for example, classify a fastener type, material type, power tool accessory type, and/or power tool application type. In such embodiments, the machine learning controller 120 may receive inputs such as current draw, RPM, and IMU magnitude associated with the power tool 105. The machine learning controller 120 then defines a margin using combinations of some of the input variables (e.g., current draw, RPM, and IMU vibration magnitude) as support vectors to maximize the margin. In some embodiments, the machine learning controller 120 defines a margin using combinations of more than one of similar input variables (e.g. motion of a tool along different axes). The margin corresponds to the distance between the two closest vectors that are classified differently. For example, the margin corresponds to the distance between a vector representing a high-torque application and a vector that represents a low-torque application. In some embodiments, a single support vector machine can use more than two input variables and define a hyperplane that separates those applications that are high-torque from the applications that are low-torque.

The training examples for a support vector machine include an input vector including values for the input variables (e.g., current draw, RPM, and IMU vibration magnitude), and an output classification indicating whether the application represents a high-torque application. During training, the support vector machine selects the support vectors (e.g., a subset of the input vectors) that maximize the margin. In some embodiments, the support vector machine may be able to define a line or hyperplane that accurately separates the applications that are high-torque from those that are not high-torque (e.g., low-torque applications, reduced target RPM applications). In other embodiments (e.g., in a non-separable case), however, the support vector machine may define a line or hyperplane that maximizes the margin and minimizes the slack variables, which measure the error in a classification of a support vector machine. After the support vector machine has been trained, new input data can be compared to the line or hyperplane to determine how to classify the new input data (e.g., to determine whether the power tool application type). In other embodiments, as mentioned above, the machine learning controller 120 can implement different machine learning algorithms to make an estimation or classification based on a set of input data. Some examples of input data, processing technique, and machine learning algorithm pairings are listed below in Table 2. The input data, listed as time series data in the below table, includes, for example, one or more of the various examples of time-series tool usage information described herein.

| Table 2 | | |
|---|---|---|
| **Input Data** | **Data Processing** | **Exemplary Model** |
| Time Series Data | N/A | RNN (using LSTM) |
| Time Series Data | Filtering (e.g. low-pass filters) | DNN classifier/regression, or another non-recurrent algorithm |
| Time Series Data | Sliding window, padding, or data subset | DNN classifier/regression, or another non-recurrent algorithm |
| Time Series Data | Make features (e.g. summarize analysis of runtime data) | KNN or another non-recurrent or recurrent algorithm |
| Time Series Data | Initial (e.g. pre-trained) model | Model adaptation |
| Time Series Data | Initial RNN or DNN analysis for classification | Markov Model (for likely tool application determination during or between tool operations) |

In the example of FIG. 1, the server 110 receives usage information from the power tool 105. In some embodiments, the server 110 uses the received usage information as additional training examples (e.g., when the actual value or classification is also known). In other embodiments, the server 110 sends the received usage information to the trained machine learning controller 120. The machine learning controller 120 then generates an estimated value or classification based on the input usage information. The server electronic processor 425 then generates recommendations for future operations of the power tool 105. For example, the trained machine learning controller 120 may determine that the application is a low-torque application. The server electronic processor 425 may then determine that a slower motor speed for the selected operating mode may extend battery and tool life. The server 110 may then transmit the suggested operating parameters to the external device 107. The external device 107 may display the suggested changes to the operating parameters and request confirmation from the user to implement the suggested changes before forwarding the changes on to the power tool 105. In other embodiments, the external device 107 forwards the suggested changes to the power tool 105 and displays the suggested changes to inform the user of changes implemented by the power tool 105.

In particular, in the embodiment illustrated in FIG. 1, the server electronic control assembly generates a set of parameters (e.g., coefficients from the ML model) and updated thresholds recommended for the operation of the power tool 105 in particular modes. For example, the machine learning controller 120 may detect a fastener type, during various operations of the power tool 105 in a power tool application type, the power tool 105 could have benefitted from a faster average rotation speed of the motor during the first seconds (e.g., the first 0.25 seconds) of operation (e.g., full trigger depression). The machine learning controller 120 may then adjust a motor speed threshold of the power tool application type such that the motor speed after the first seconds of the power tool application type of the power tool 105 is increased. The server 110 then transmits the updated motor speed threshold to the power tool 105 via the external device 107. In some embodiments, the increased motor speed is achieved via field weakening/phase advance techniques.

The power tool 105 receives the updated motor speed threshold, updates operational parameters according to the updated motor speed threshold, and operates according to the updated motor speed threshold. In some embodiments, the power tool 105 periodically transmits the usage data to the server 110 based on a predetermined schedule (e.g., every eight hours). In other embodiments, the power tool 105 transmits the usage data after a predetermined period of inactivity (e.g., when the power tool 105 has been inactive for two hours), which may indicate that a session of operation has been completed. In some embodiments, the power tool 105 transmits the usage data in real time to the server 110 and may implement the updated thresholds and parameters in subsequent operations.

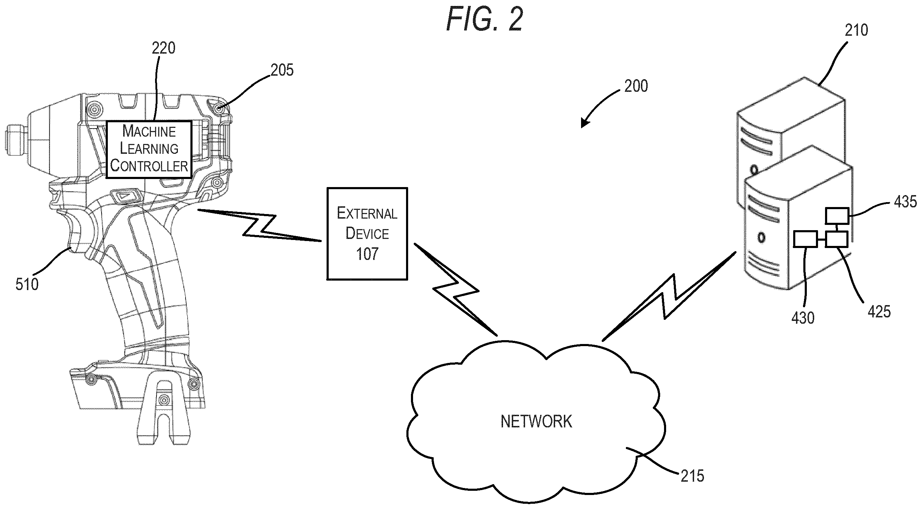

FIG. 2 illustrates a second power tool system 200. The second power tool system 200 includes a power tool 205, the external device 107, a server 210, and a network 215. The power tool 205 is similar to that of the power tool system 100 of FIG. 1 and collects similar usage information as that described with respect to FIG. 1. Unlike the power tool 105 of the first power tool system 100, the power tool 205 of the second power tool system 200 includes a machine learning controller 220. In the illustrated embodiment, the power tool 205 can receive the machine learning controller 220 from the server 210 over the network 215. In some embodiments, the power tool 205 receives the machine learning controller 220 during manufacturing, while in other embodiments, a user of the power tool 205 may select to receive the machine learning controller 220 after the power tool 205 has been manufactured and, in some embodiments, after operation of the power tool 205. The machine learning controller 220 can be a trained machine learning controller similar to the trained machine learning controller 120 in which the machine learning controller 120 has been trained using various training examples, and is configured to receive new input data and generate an estimation or classification for the new input data.

The power tool 205 communicates with the server 210 via, for example, the external device 107, as described above with respect to FIG. 1. The external device 107 may also provide additional functionality (e.g., generating a graphical user interface) to the power tool 205. The server 210 of the power tool system 200 may utilize usage information from power tools similar to the power tool 205 (for example, when the power tool 205 is a drill, the server 210 may receive usage information from various other drills) and trains a machine learning program using training examples from the received usage information from the power tools. The server 210 can then transmit the trained machine learning program to the machine learning controller 220 of the power tool 205 for execution during future operations of the power tool 205.

Accordingly, in some embodiments, the machine learning controller 220 includes a trained machine learning program provided, for example, at the time of manufacture. During future operations of the power tool 205, the machine learning controller 220 analyzes new usage data from the power tool 205 and generates recommendations or actions based on the new usage data. As discussed above with respect to the machine learning controller 120, the machine learning controller 220 has one or more specific tasks such as, for example, determining a current application of the power tool 205. In other embodiments, the task of the machine learning controller 220 may be different. In some embodiments, a user of the power tool 205 may select a task for the machine learning controller 220 using, for example, a graphical user interface generated by the external device 107. The external device 107 may then transmit the target task for the machine learning controller 220 to the server 210. The server 210 then transmits a trained machine learning program, trained for the target task, to the machine learning controller 220. Based on the estimations or classifications from the machine learning controller 220, the power tool 205 may change its operation, adjust one of the operating modes of the power tool 205, and/or adjust a different aspect of the power tool 205. In some embodiments, the power tool 205 may include more than one machine learning controller 220, each having a different target task.

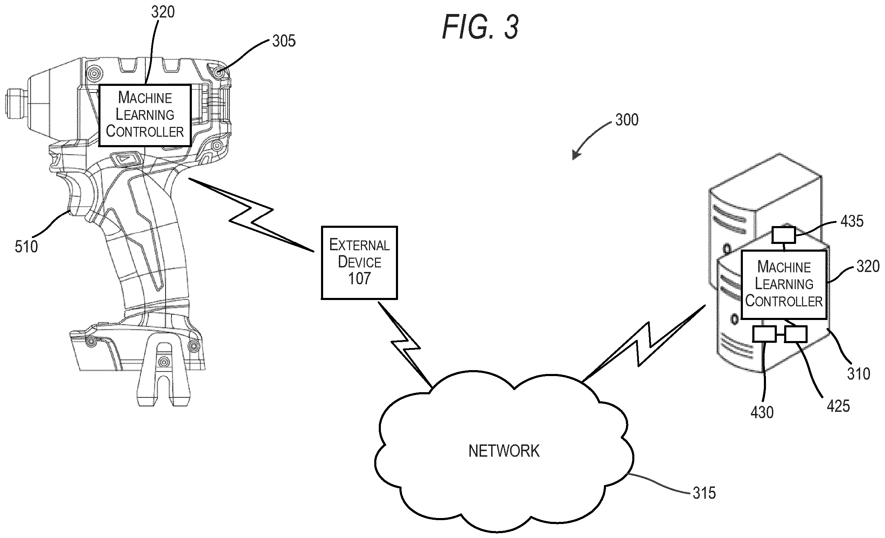

FIG. 3 illustrates a third power tool system 300. The third power tool system 300 also includes a power tool 305, an external device 107, a server 310, and a network 315. The power tool 305 is similar to the power tools 105, 205 described above and includes similar sensors that monitor various types of usage information of the power tool 305 (e.g., current draw, RPM, IMU vibration magnitude, motor speed, output torque, type of battery pack, state of charge of battery pack, and the like). The power tool 305 of the third power tool system 300, however, includes an adjustable machine learning controller 320 instead of, for example, a static machine learning controller. In some embodiments, the adjustable machine learning controller 320 of the power tool 305 receives the machine learning program from the server 310 over the network 315. Unlike a static machine learning controller, the server 310 may transmit updated versions of the machine learning program to the adjustable machine learning controller 320 to replace previous versions.

The power tool 305 of the third power tool system 300 can transmit feedback to the server 310 (via, for example, the external device 107) regarding the operation of the adjustable machine learning controller 320. The power tool 305, for example, may transmit an indication to the server 310 regarding the number of operations that were incorrectly classified by the adjustable machine learning controller 320. The server 310 receives the feedback from the power tool 305, updates the machine learning program, and provides the updated program to the adjustable machine learning controller 320 to reduce the number of operations that are incorrectly classified. Thus, the server 310 updates or re-trains the adjustable machine learning controller 320 in view of the feedback received from the power tool 305. In some embodiments, the server 310 also uses feedback received from similar power tools to adjust the adjustable machine learning controller 320. In some embodiments, the server 310 updates the adjustable machine learning controller 320 periodically (e.g., every month). In other embodiments, the server 310 updates the adjustable machine learning controller 320 when the server 310 receives a predetermined number of feedback indications (e.g., after the server 310 receives two feedback indications). The feedback indications may be positive (e.g., indicating that the adjustable machine learning controller 320 correctly classified a condition, event, operation, or combination thereof), or the feedback may be negative (e.g., indicating that the adjustable machine learning controller 320 incorrectly classified a condition, event, operation, or combination thereof).

In some embodiments, the server 310 also utilizes new usage data received from the power tool 305 and other similar power tools to update the adjustable machine learning controller 320. For example, the server 310 may periodically re-train (or adjust the training) of the adjustable machine learning controller 320 based on the newly received usage data. The server 310 then transmits an updated version of the adjustable machine learning controller 320 to the power tool 305.

When the power tool 305 receives the updated version of the adjustable machine learning controller 320 (e.g., when an updated machine learning program is provided to and stored on the machine learning controller 320), the power tool 305 replaces the current version of the adjustable machine learning controller 320 with the updated version. In some embodiments, the power tool 305 is equipped with a first version of the adjustable machine learning controller 320 during manufacturing. In such embodiments, the user of the power tool 305 may request newer versions of the adjustable machine learning controller 320. In some embodiments, the user may select a frequency with which the adjustable machine learning controller 320 is transmitted to the power tool 305.

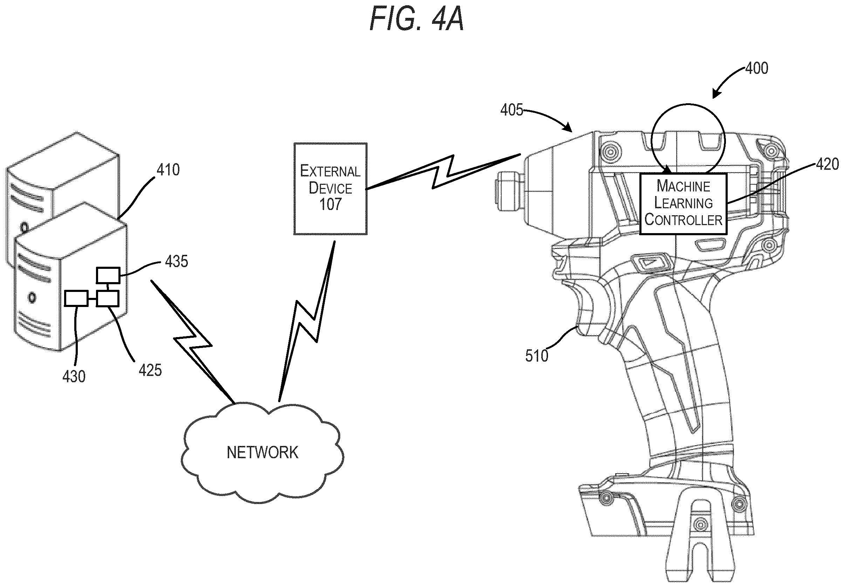

FIG. 4A illustrates a fourth power tool system 400. The fourth power tool system 400 includes a power tool 405, an external device 107, a network 415, and a server 410. The power tool 405 includes a self-updating machine learning controller 420. The self-updating machine learning controller 420 is first loaded on the power tool 405 during, for example, manufacturing. The self-updating machine learning controller 420 updates itself. In other words, the self-updating machine learning controller 420 receives new usage information from the sensors in the power tool 405, feedback information indicating desired changes to operational parameters (e.g., user wants to increase motor speed or output torque), feedback information indicating whether the classification made by the machine learning controller 420 is incorrect, or a combination thereof. The self-updating machine learning controller 420 then uses the received information to re-train the self-updating machine learning controller 420.

In some embodiments, the power tool 405 re-trains the self-updating machine learning controller 420 when the power tool 405 is not in operation. For example, the power tool 405 may detect when the motor has not been operated for a predetermined time period, and start a re-training process of the self-updating machine learning controller 420 while the power tool 405 remains non-operational. Training the self-updating machine learning controller 420 while the power tool 405 is not operating allows more processing power to be used in the re-training process instead of competing for computing resources typically used to operate the power tool 405.

As shown in FIG. 4A, in some embodiments, the power tool 405 also communicates with the external device 107 and a server 410. For example, the external device 107 communicates with the power tool 405 as described above with respect to FIGS. 1-3. The external device 107 generates a graphical user interface to facilitate the adjustment of operational parameters of the power tool 405. The external device 107 may also bridge the communication between the power tool 405 and the server 410. For example, as described above with respect to FIG. 2, in some embodiments, the external device 107 receives a selection of a target task for the machine learning controller 420. The external device 107 may then request a corresponding machine learning program from the server 410 for transmitting to the power tool 405. The power tool 405 also communicates with the server 410 (e.g., via the external device 107). In some embodiments, the server 410 may also re-train the self-updating machine learning controller 420, for example, as described above with respect to FIG. 3. The server 410 may use additional training examples from other similar power tools. Using these additional training examples may provide greater variability and ultimately make the machine learning controller 420 more reliable. In some embodiments, the power tool 405 re-trains the self-updating machine learning controller 420 when the power tool 405 is not in operation, and the server 410 may re-train the machine learning controller 420 when the power tool 405 remains in operation (for example, while the power tool 405 is in operation during a scheduled re-training of the machine learning controller 420). Accordingly, in some embodiments, the self-updating machine learning controller 420 may be re-trained on the power tool 405, by the server 410, or with a combination thereof. In some embodiments, the server 410 does not re-train the self-updating machine learning controller 420, but still exchanges information with the power tool 405. For example, the server 410 may provide other functionality for the power tool 405 such as, for example, transmitting information regarding various operating modes for the power tool 405.

Each of FIGS. 1-4A describes a power tool system 100, 200, 300, 400 in which a power tool 105, 205, 305, 405 communicates with a server 110, 210, 310, 410 and with an external device 107. As discussed above with respect to FIG. 1, the external device 107 may bridge communication between the power tool 105, 205, 305, 405 and the server 110, 210, 310, 410. That is, the power tool 105, 205, 305, 405 may communicate directly with the external device 107. The external device 107 may then forward the information received from the power tool 105, 205, 305, 405 to the server 110, 210, 310, 410. Similarly, the server 110, 210, 310, 410 may transmit information to the external device 107 to be forwarded to the power tool 105, 205, 305, 405. In such embodiments, the power tool 105, 205, 305, 405 may include a transceiver or wireless communication module to communicate with the external device 107 via, for example, a short-range communication protocol such as BLUETOOTH®. The external device 107 may include a short-range transceiver to communicate with the power tool 105, 205, 305, 405, and may also include a long-range transceiver to communicate with the server 110, 210, 310, 410. In some embodiments, a wired connection (via, for example, a USB cable) is provided between the external device 107 and the power tool 105, 205, 405 to enable direct communication between the external device 107 and the power tool 105, 205, 305, 405. Providing the wired connection may provide a faster and more reliable communication method between the external device 107 and the power tool 105, 205, 305, 405.

The external device 107 may include, for example, a smartphone, a tablet computer, a cellular phone, a laptop computer, a smart watch, and the like. The server 110, 210, 310, 410 illustrated in FIGS. 1-4A includes at least a server electronic processor 425, a server memory 430, and a transceiver 435 to communicate with the power tool 105, 205, 305, 405 via the network 115, 215, 315, 415. The server electronic processor 425 receives tool usage data from the power tool 105, 205, 305, 405, stores the tool usage data in the server memory 430, and, in some embodiments, uses the received tool usage data for building or adjusting the machine learning controller 120, 220, 320, 420. The term external system device may be used herein to refer to one or more of the external device 107 and the server 110, 210, 310, and 410, as each are external to the power tool 105, 205, 305, 405. Further, in some embodiments, the external system device is a wireless hub, such as a beaconing device placed on a jobsite to monitor tools, function as a gateway network device (e.g., providing Wi-Fi® network), or both. As described herein, the external system device includes at least an input/output unit (e.g., a wireless or wired transceiver) for communication, a memory storing instructions, and an electronic processor to execute instructions stored on the memory to carry out the functionality attributed to the external system device.

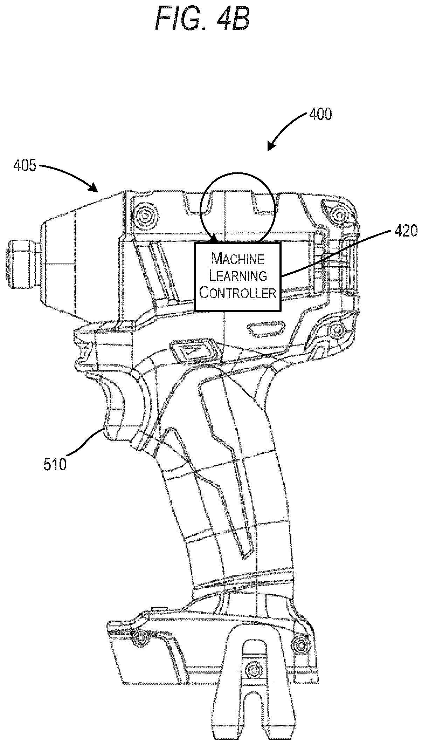

In some embodiments, the power tool 405 may not communicate with the external device 107 or the server 410. For example, FIG. 4B illustrates the power tool 405 with no connection to the external device 107 or the server 410. Rather, since the power tool 405 includes, for example, the self-updating machine learning controller 420, the power tool 405 can implement the machine learning controller 420, receive user feedback, and update the machine learning controller 420 without communicating with the external device 107 or the server 410.

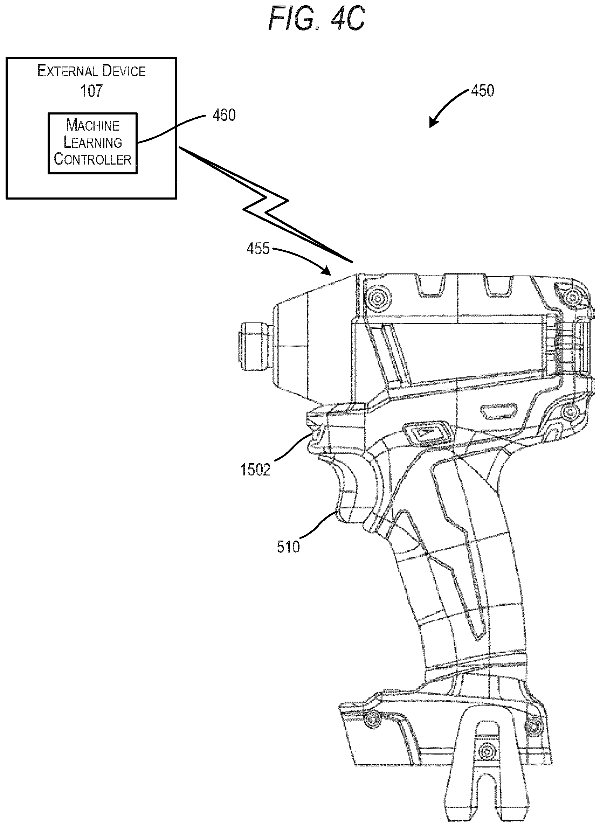

FIG. 4C illustrates a fifth power tool system 450 including a power tool 455 and the external device 107. The external device 107 communicates with the power tool 455 using the various methods described above with respect to FIGS. 1-4A. In particular, the power tool 455 transmits operational data regarding the operation of the power tool 455 to the external device 107. The external device 107 generates a graphical user interface to facilitate the adjustment of operational parameters of the power tool 455 and to provide information regarding the operation of the power tool 455 to the user. In the illustrated embodiment of FIG. 4C, the external device 107 includes a machine learning controller 460. In some embodiments, the machine learning controller 460 is similar to the machine learning controller 120 of FIG. 1. In such embodiments, the machine learning controller 460 receives the usage information from the power tool 455 and generates recommendations for future operations of the power tool 455. The machine learning controller 460 may, in such embodiments, generate a set of parameters and updated threshold recommended for the operation of the power tool 105 in particular modes. The external device 107 then transmits the updated set of parameters and updated thresholds to the power tool 455 for implementation.

In some embodiments, the machine learning controller 460 is similar to the machine learning controller 320 of FIG. 3. In such embodiments, the external device 107 may update the machine learning controller 460 based on, for example, feedback received from the power tool 455 and/or other operational data from the power tool 455. In such embodiments, the power tool 455 also includes a machine learning controller similar to, for example, the adjustable machine learning controller 320 of FIG. 3. The external device 107 can then modify and update the adjustable machine learning controller 320 and communicate the updates to the machine learning controller 320 to the power tool 455 for implementation. For example, the external device 107 can use the feedback from the user to retrain the machine learning controller 460, to continue training a machine learning controller 460 implementing a reinforcement learning control, or may, in some embodiments, use the feedback to adjust a switching rate on a recurrent neural network for example.

In some embodiments, as discussed briefly above, the power tool 455 also includes a machine learning controller. The machine learning controller of the power tool 455 may be similar to, for example, the machine learning controller 220 of FIG. 2, the adjustable machine learning controller 320 of FIG. 3, or the self-updating machine learning controller 420 of FIG. 4A.

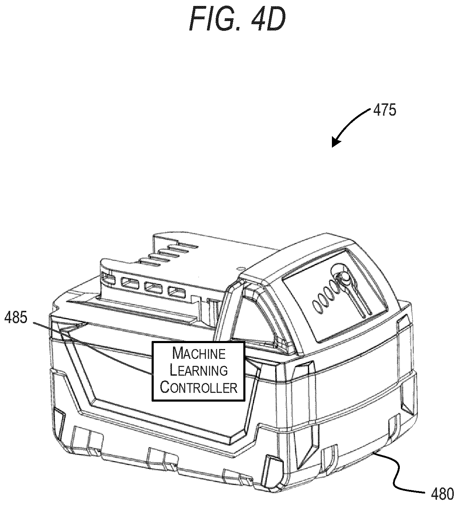

FIG. 4D illustrates a sixth power tool system 475 including a battery pack 480. The battery pack 480 includes a machine learning controller 485. Although not illustrated, the battery pack 480 may, in some embodiments, communicate with the external device 107, a server, or a combination thereof through, for example, a network. Alternatively, or in addition, the battery pack may communicate with a power tool 455, such as a power tool 455 attached to the battery pack 480. The external device 107 and the server may be similar to the external device 107 and server 110, 210, 310, 410 described above with respect to FIGS. 1-4A. The machine learning controller 485 of the battery pack 480 may be similar to any of the machine learning controllers 220, 320, 420 described above. In some embodiments, the machine learning controller 220, 320, 420 controls operation of the battery pack 480. For example, the machine learning controller 485 may help identify different battery conditions that may be detrimental to the battery pack 480 and may automatically change (e.g., increase or decrease) the amount of current provided by the battery pack 480, and/or may change some of the thresholds that regulate the operation of the battery pack 480. For example, the battery pack 480 may, from instructions of the machine learning controller 485, reduce power to inhibit overheating of the battery cells. In some embodiments, the battery pack 480 communicates with a power tool (e.g., similar to the power tool 105, 205, 305, 405, 455) and the machine learning controller 485 controls at least some aspects and/or operations of the power tool. For example, the battery pack 480 may receive usage data (e.g., sensor data) from the power tool and generate outputs to control the operation of the power tool. The battery pack 480 may then transmit the control outputs to the electronic processor of the power tool.

In still other embodiments, a power system including a charger (e.g., for charging the battery pack 480 or a similar battery pack without a machine learning controller) is provided, wherein the charger includes a machine learning controller similar to those described herein.

FIGS. 1-4C illustrate example power tools in the form of an impact driver 105, 205, 305, 405. The particular power tools 105, 205, 305, 405 illustrated and described herein, however, are merely representative. In other embodiments, the power tool systems 100, 200, 300, 400 described herein may include different types of power tools such as, for example, a jigsaw, a reciprocating saw, a bandsaw, a grinder, a cutoff saw, a tire buffer, a mud mixer, a bandfile, a polisher, a sander, a cutoff tool, a rotary hammer, a drill-driver, a hammer drill, a right angle drill, an impact driver, an impact wrench, a ratchet, a screwdriver, a crimper, a pipe threader, a pump, a cable cutter, a cable stripper, a rod cutter, a tube cutter, a pipe shear, a knockout tool, a PEX expander, an inflator, a compressor, a sewer drum, a transfer pump, a drain snake, a rivet tool, a heat gun, a grease gun, a caulk gun, a chain hoist, a track saw, a miter saw, a table saw, a multi-tool, a router, a planer, a vacuum, a fan, a blower, etc.

A power tool 105, 205, 305, 405 of the power tool systems 100, 200, 300, 400 is configured to perform one or more specific tasks (e.g., drilling, cutting, fastening, pressing, lubricant application, sanding, heating, grinding, bending, forming, impacting, polishing, lighting, etc.). For example, an impact wrench is associated with the task of generating a rotational output (e.g., to drive a bit), while a reciprocating saw is associated with the task of generating a reciprocating output motion (e.g., for pushing and pulling a saw blade). The task(s) associated with a particular tool may also be referred to as the primary function(s) of the tool. Each power tool includes a drive device specifically designed for the primary function of the power tool. For example, in the illustrated embodiments in which the power tool corresponds to an impact driver, the drive device is a socket. In some embodiments, however, where the power tool is, for example, a power drill, the drive device may include an adjustable chuck as a bit driver.

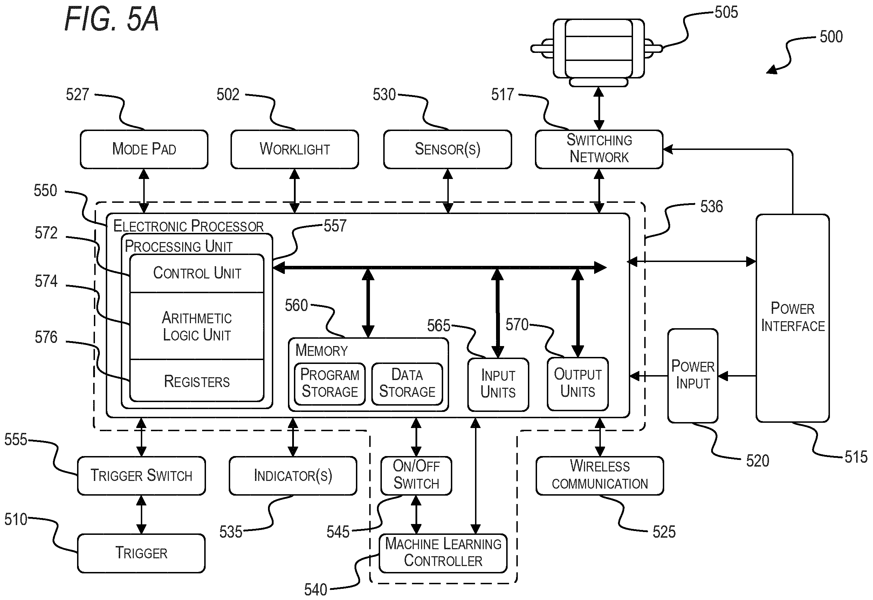

Each of FIGS. 1-4D illustrate various embodiments in which different types of machine learning controllers 120, 220, 320, 420 are used in conjunction with the power tool 105, 205, 305, 405. In some embodiments, each power tool 105, 205, 305, 405 may include more than one machine learning controller 120, 220, 320, 420, and each machine learning controller 120, 220, 320, 420 may be of a different type. For example, a power tool 105, 205, 305, 405 may include a static machine learning controller and may also include a self-updating machine learning controller 420, as described with respect to FIG. 4A. In another example, the power tool 105, 205, 305, 405 may include a static machine learning controller. The machine learning controller 220 may be subsequently removed and replaced by, for example, an adjustable machine learning controller 320. In other words, the same power tool may include any of the machine learning controllers 120, 220, 320, 420 described above with respect to FIGS. 1-4B. Additionally, a machine learning controller 540, shown in FIG. 5A and described in further detail below, is an example controller that may be implemented as any one or more of the machine learning controllers 120, 220, 320, 420, 460, and 485.

FIG. 5A is a block diagram of a representative power tool 500 in the form of an impact driver, and including a machine learning controller. Similar to the example power tools of FIGS. 1-4C, the power tool 500 is representative of various types of power tools (e.g., including the list of various example types of the power tool 105 provided above). Accordingly, the description with respect to the power tool 500 is similarly applicable to other types of power tools. The machine learning controller of the power tool 500 may be a static machine learning controller, an adjustable machine learning controller, a self-updating machine learning controller, etc. Although the power tool 500 of FIG. 5A is described as being in communication with the external device 107 or with a server, in some embodiments, the power tool 500 is self-contained or closed, in terms of machine learning, and does not need to communicate with the external device 107 or the server to perform the functionality of the machine learning controller 540 described in more detail below.

As shown in FIG. 5A, the power tool 500 includes a worklight 502, a motor 505, a trigger 510, a power interface 515, a switching network 517, a power input control 520, a wireless communication device 525, a mode pad 527, a plurality of sensors 530, a plurality of indicators 535, and an electronic control assembly 536. The electronic control assembly 536 includes a machine learning controller 540, an activation switch 545, and an electronic processor 550. The motor 505 actuates the drive device of the power tool 500 and allows the drive device to perform the particular task for the power tool 500. The motor 505 receives power from an external power source through the power interface 515. In some embodiments, the external power source includes an AC power source. In such embodiments, the power interface 515 includes an AC power cord that is connectable to, for example, an AC outlet. In other embodiments, the external power source includes a battery pack. In such embodiments, the power interface 515 includes a battery pack interface. The battery pack interface may include a battery pack receiving portion on the power tool 500 that is configured to receive and couple to a battery pack (e.g., the battery pack 480 or a similar battery pack without machine learning controller). The battery pack receiving portion may include a connecting structure to engage a mechanism that secures the battery pack and a terminal block to electrically connect the battery pack to the power tool 500.

The motor 505 is energized based on a state of the trigger 510. Generally, when the trigger 510 is activated, the motor 505 is energized, and when the trigger 510 is deactivated, the motor is de-energized. In some embodiments, such as the power tools 105, 205, 305, 405 illustrated in FIGS. 1-4C, the trigger 510 extends partially down a length of the handle of the power tool and is moveably coupled to the handle such that the trigger 510 moves with respect to the power tool housing. In the illustrated embodiment, the trigger 510 is coupled to a trigger switch 555 such that when the trigger 510 is depressed, the trigger switch 555 is activated, and when the trigger is released, the trigger switch 555 is deactivated. In the illustrated embodiment, the trigger 510 is biased (e.g., with a biasing member such as a spring) such that the trigger 510 moves in a second direction away from the handle of the power tool 500 when the trigger 510 is released by the user. In other words, the default state of the trigger switch 555 is to be deactivated unless a user presses the trigger 510 and activates the trigger switch 555.

The switching network 517 enables the electronic processor 550 to control the operation of the motor 505. The switching network 517 includes a plurality of electronic switches (e.g., FETs, bipolar transistors, and the like) connected together to form a network that controls the activation of the motor 505 using a pulse-width modulated (PWM) signal. For instance, the switching network 217 may include a six-FET bridge that receives pulse-width modulated (PWM) signals from the electronic processor 550 to drive the motor 505. Generally, when the trigger 510 is depressed as indicated by an output of the trigger switch 555, electrical current is supplied from the power interface 515 to the motor 505 via the switching network 517. When the trigger 510 is not depressed, electrical current is not supplied from the power interface 515 to the motor 505.

In response to the electronic processor 550 receiving the activation signal from the trigger switch 555, the electronic processor 550 activates the switching network 517 to provide power to the motor 505. The switching network 517 controls the amount of current available to the motor 505 and thereby controls the speed and torque output of the motor 505. The mode pad 527 allows a user to select a mode of the power tool 500 and indicates to the user the currently selected mode of the power tool 500. In some embodiments, the mode pad 527 includes a single actuator. In such embodiments, a user may select an operating mode for the power tool 500 based on, for example, a number of actuations of the mode pad 527. For example, when the user activates the actuator three times, the power tool 500 may operate in a third operating mode. In some embodiments, the mode pad 527 includes a plurality of actuators, each actuator corresponding to a different operating mode. For example, the mode pad 527 may include four actuators, when the user activates one of the four actuators, the power tool 500 may operate in a first operating mode. The electronic processor 550 receives a user selection of an operating mode via the mode pad 527, and controls the switching network 517 such that the motor 505 is operated according to the selected operating mode. In some embodiments, the power tool 500 does not include a mode pad 527. In such embodiments, the power tool 500 may operate in a single mode, or may include a different selection mechanism for selecting an operation mode for the power tool 500. In some embodiments, as described in more detail below, the power tool 500 (e.g., the electronic control assembly 536) automatically selects an operating mode for the power tool 500 using, for example, the machine learning controller 540.

The sensors 530 are coupled to the electronic processor 550 and communicate to the electronic processor 550 various output signals indicative of different parameters of the power tool 500 or the motor 505. The sensors 530 include, for example, Hall Effect sensors, motor current sensors, motor voltage sensors, temperature sensors, torque sensors, a microphone, position or distance sensors (e.g., laser, radio frequency [RF], laser imaging, detection, and ranging [LIDAR], sound navigation and ranging [SONAR], or the like), and/or movement sensors, such as accelerometers or gyroscopes, chemical sensors, IMUs (e.g., to generate vibration data), and the like. The Hall Effect sensors output motor feedback information to the electronic processor 550 such as an indication (e.g., a signal, a pulse signal, etc.) related to the motor's position, velocity, and/or acceleration of the rotor of the motor 505. In some embodiments, the electronic processor 550 uses the motor feedback information from the Hall Effect sensors to control the switching network 517 to drive the motor 505. For example, by selectively enabling and disabling the switching network 517, power is selectively provided to the motor 505 to cause rotation of the motor at a specific speed, a specific torque, or a combination thereof. The electronic processor 550 may also control the operation of the switching network 517 and the motor 505 based on other sensors included in the power tool 500. For example, in some embodiments, the electronic processor 550 changes the control signals based on a sensor output signal indicating a number of impacts delivered by the power tool 500, a sensor output signal indicating a speed of an anvil of the power tool 500, and the like. The output signals from the sensors are used to ensure proper timing of control signals to the switching network 517 and, in some instances, to provide closed-loop feedback to control the speed of the motor 505 to be within a target range or at a target level.

The indicators 535 are also coupled to the electronic processor 550. The indicators 535 receive control signals from the electronic processor 550 to generate a visual signal to convey information regarding the operation or state of the power tool 500 to the user. The indicators 535 may include, for example, LEDs or a display screen and may generate various signals indicative of, for example, an operational state or mode of the power tool 500, an abnormal condition or event detected during the operation of the power tool 500, and the like. For example, the indicators 535 may indicate measured electrical characteristics of the power tool 500, the state or status of the power tool 500, an operating mode of the power tool 500 (discussed in further detail below), and the like. In some embodiments, the indicators 535 include elements to convey information to a user through audible or tactile outputs. In some embodiments, the power tool 500 does not include the indicators 535. In some embodiments, the operation of the power tool 500 alerts the user regarding a power tool condition. For example, a fast deceleration of the motor 505 may indicate that an abnormal condition is present. In some embodiments, the power tool 500 communicates with the external device 107, and the external device 107 generates a graphical user interface that conveys information to the user without the need for indicators 535 on the power tool 500 itself.

The power interface 515 is coupled to the power input control 520. The power interface 515 transmits the power received from the external power source to the power input control 520. The power input control 520 includes active and/or passive components (e.g., voltage step-down controllers, voltage converters, rectifiers, filters, etc.) to regulate or control the power received through the power interface 515 to the electronic processor 550 and other components of the power tool 500, such as the wireless communication device 525.

The wireless communication module or wireless communication device 525 is coupled to the electronic processor 550. In the example power tools 105, 205, 305, 405 of FIGS. 1-4A and 4C, the wireless communication device 525 is located near the foot of the power tool 105, 205, 305, 405 (see FIGS. 1-4) to save space and ensure that the magnetic activity of the motor 505 does not affect the wireless communication between the power tool 500 and the server 110, 210, 310, 410 or with an external device 107. In a particular example, the wireless communication device 525 is positioned under the mode pad 527. The wireless communication device 525 may include, for example, a radio transceiver and antenna, a memory, a processor, and a real-time clock. The radio transceiver and antenna operate together to send and receive wireless messages to and from the external device 107, a second power tool 500, or the server 110, 210, 310, 410 and the processor. The memory of the wireless communication device 525 stores instructions to be implemented by the processor and/or may store data related to communications between the power tool 500 and the external device 107, a second power tool 500, or the server 110, 210, 310, 410. The processor for the wireless communication device 525 controls wireless communications between the power tool 500 and the external device 107, a second power tool 500, or the server 110, 210, 310, 410. For example, the processor of the wireless communication device 525 buffers incoming and/or outgoing data, communicates with the electronic processor 550, and determines the communication protocol and /or settings to use in wireless communications.

In some embodiments, the wireless communication device 525 is a Bluetooth® controller. The Bluetooth® controller communicates with the external device 107, a second power tool 500, or server 110, 210, 310, 410 employing the Bluetooth® protocol. In such embodiments, therefore, the external device 107, a second power tool 500, or server 110, 210, 310, 410 and the power tool 500 are within a communication range (i.e., in proximity) of each other while they exchange data. In other embodiments, the wireless communication device 525 communicates using other protocols (e.g., Wi-Fi, cellular protocols, a proprietary protocol, etc.) over a different type of wireless network. For example, the wireless communication device 525 may be configured to communicate via Wi-Fi through a wide area network such as the Internet or a local area network, or to communicate through a piconet (e.g., using infrared or NFC communications). The communication via the wireless communication device 525 may be encrypted to protect the data exchanged between the power tool 500 and the external device 107, a second power tool 500, or server 110, 210, 310, 410 from third parties.

In some embodiments, the wireless communication device 525 includes a real-time clock (RTC). The RTC increments and keeps time independently of the other power tool components. The RTC receives power from the power interface 515 when an external power source is connected to the power tool 500, and may receive power from a back-up power source when the external power source is not connected to the power tool 500. The RTC may time stamp the operational data from the power tool 500. Additionally, the RTC may enable a security feature in which the power tool 500 is disabled (e.g., locked-out and made inoperable) when the time of the RTC exceeds a lockout time determined by the user.

The wireless communication device 525, in some embodiments, exports tool usage data, maintenance data, mode information, drive device information, and the like from the power tool 500 (e.g., from the power tool electronic processor 550). The exported data may indicate, for example, when work was accomplished and that work was accomplished to specification. The exported data can also provide a chronological record of work that was performed, track duration of tool usage, and the like. The server 110, 210, 310, 410 receives the exported information, either directly from the wireless communication device 525 or through an external device 107, and logs the data received from the power tool 500. As discussed in more detail below, the exported data can be used by the power tool 500, the external device 107, or the server 110, 210, 310, 410 to train or adapt a machine learning controller relevant to similar power tools. The wireless communication device 525 may also receive information from the server 110, 210, 310, 410, the external device 107, or a second power tool 500, such as configuration data, operation threshold, maintenance threshold, mode configurations, programming for the power tool 500, updated machine learning controllers for the power tool 500, and the like. For example, the wireless communication device 525 may exchange information with a second power tool 500 directly, or via an external device 107.

In some embodiments, the power tool 500 does not communicate with the external device 107 or with the server 110, 210, 310, 410 (e.g., power tool 405 in FIG. 4B). Accordingly, in some embodiments, the power tool 500 does not include the wireless communication device 525. In some embodiments, the power tool 500 includes a wired communication interface to communicate with, for example, the external device 107 or a different device (e.g., another power tool 500). The wired communication interface may provide a faster communication route than the wireless communication device 525.

In some embodiments, the power tool 500 includes a data sharing setting. The data sharing setting indicates what data, if any, is exported from the power tool 500 to the server 110, 210, 310, 410. In one embodiment, the power tool 500 receives (e.g., via a graphical user interface generated by the external device 107) an indication of the type of data to be exported from the power tool 500. In one embodiment, the external device 107 may display various options or levels of data sharing for the power tool 500, and the external device 107 receives the user's selection via its generated graphical user interface. For example, the power tool 500 may receive an indication that only usage data (e.g., motor current and voltage, number of impacts delivered, torque associated with each impact, and the like) is to be exported from the power tool 500, but may not export information regarding, for example, the modes implemented by the power tool 500, the location of the power tool 500, and the like. In some embodiments, the data sharing setting may be a binary indication of whether or not data regarding the operation of the power tool 500 (e.g., usage data) is transmitted to the server 110, 210, 310, 410. The power tool 500 receives the user's selection for the data sharing setting and stores the data sharing setting in memory to control the communication of the wireless communication device 525 according to the selected data sharing setting.

The electronic control assembly 536 is electrically and/or communicatively connected to a variety of modules or components of the power tool 500. The electronic control assembly 536 controls the motor 505 based on the outputs and determinations from the machine learning controller 540. In particular, the electronic control assembly 536 includes the electronic processor 550 (also referred to as an electronic controller), the machine learning controller 540, and the corresponding activation switch 545. In some embodiments, the electronic processor 550 includes a plurality of electrical and electronic components that provide power, operational control, and protection to the components and modules within the electronic processor 550 and/or power tool 500. For example, the electronic processor 550 includes, among other things, a processing unit 557 (e.g., a microprocessor, a microcontroller, or another suitable programmable device), a memory 560, input units 565, and output units 570. The processing unit 557 includes, among other things, a control unit 572, an arithmetic logic unit ("ALU") 574, and a plurality of registers 576. In some embodiments, the electronic processor 550 is implemented partially or entirely on a semiconductor (e.g., a field-programmable gate array ["FPGA"] semiconductor) chip or an Application Specific Integrated Circuit ("ASIC"), such as a chip developed through a register transfer level ("RTL") design process.

The memory 560 includes, for example, a program storage area and a data storage area. The program storage area and the data storage area can include combinations of different types of memory, such as read-only memory ("ROM"), random access memory ("RAM") (e.g., dynamic RAM ["DRAM"], synchronous DRAM ["SDRAM"], etc.), electrically erasable programmable read-only memory ("EEPROM"), flash memory, a hard disk, an SD card, or other suitable magnetic, optical, physical, or electronic memory devices. The processing unit 557 is connected to the memory 560 and executes software instructions that are capable of being stored in a RAM of the memory 560 (e.g., during execution), a ROM of the memory 560 (e.g., on a generally permanent basis), or another non-transitory computer readable medium such as another memory or a disc. Software included in the implementation of the power tool 500 can be stored in the memory 560 of the electronic processor 550. The software includes, for example, firmware, one or more applications, program data, filters, rules, one or more program modules, and other executable instructions. In some embodiments, the machine learning controller 540 may be stored in the memory 560 of the electronic processor 550 and are executed by the processing unit 557.

The electronic processor 550 is configured to retrieve from memory 560 and execute, among other things, instructions related to the control processes and methods described herein. The electronic processor 550 is also configured to store power tool information on the memory 560 including tool usage information, information identifying the type of tool, a unique identifier for the particular tool, user characteristics (e.g., identity, trade type, skill level), and other information relevant to operating or maintaining the power tool 500 (e.g., received from an external source, such as the external device 107 or pre-programed at the time of manufacture). The tool usage information, such as current levels, motor speed, motor acceleration, motor direction, number of impacts, may be captured or inferred from data output by the sensors 530. More particularly, Table 3 shows example types of tool usage information which may be captured or inferred by the electronic processor 550. In other constructions, the electronic processor 550 includes additional, fewer, or different components.

| Table 3 | | |
|---|---|---|
| **Type of data** | **Time-series data** | **Non-time-series data** |
| Raw data | Trigger, current, voltage, speed, torque, temperature, motion, timing between events (ex: impacts), RPMs, vibration, position, etc. | Duration, date, time, time, time since last use, mode, clutch setting, direction, battery type, presence of side-handle, errors, history of past applications and switching rate, user input, external inputs, gear etc. |
| Derived features | Filtered values of raw data, fast Fourier transforms (FFTs), subsampled/pooled data, fitted parameters (ex: polynomial fits), PCA, features generated by encoder [decoder] networks, derived features (ex: estimated energy, momentum, inertia of system), derivatives/ integrals/ functions/ accumulators of parameters, padded data, sliding window of data, etc. | Principal component analysis (PCA), features generated by encoder [decoder] networks, likelihood matrix of application / history, functions of inputs, etc. |

The machine learning controller 540 is coupled to the electronic processor 550 and to the activation switch 545. The activation switch 545 switches between an activated state and a deactivated state. When the activation switch 545 is in the activated state, the electronic processor 550 is in communication with the machine learning controller 540 and receives decision outputs from the machine learning controller 540. When the activation switch 545 is in the deactivated state, the electronic processor 550 is not in communication with the machine learning controller 540. In other words, the activation switch 545 selectively enables and disables the machine learning controller 540. As described above with respect to FIGS. 1-4D, the machine learning controller 540 can include a trained machine learning controller that utilizes previously collected power tool usage data to analyze and classify new usage data from the power tool 500. As explained in more detail below, the machine learning controller 540 can identify conditions, applications, states of the power tool, etc. In some embodiments, the activation switch 545 switches between an activated state and a deactivated state. In such embodiments, while the activation switch 545 is in the activated state, the electronic processor 550 controls the operation of the power tool 500 (e.g., changes the operation of the motor 505) based on the determinations from the machine learning controller 540. Otherwise, when the activation switch 545 is in the deactivated state, the machine learning controller 540 is disabled and the machine learning controller 540 does not affect the operation of the power tool 500. In some embodiments, however, the activation switch 545 switches between an activated state and a background state. In such embodiments, when the activation switch 545 is in the activated state, the electronic processor 550 controls the operation of the power tool 500 based on the determinations or outputs from the machine learning controller 540. However, when the activation switch 545 is in the background state, the machine learning controller 540 continues to generate output based on the usage data of the power tool 500 and may calculate (e.g., determine) thresholds or other operational levels, but the electronic processor 550 does not change the operation of the power tool 500 based on the determinations and/or outputs from the machine learning controller 540. In other words, in such embodiments, the machine learning controller 540 operates in the background without affecting the operation of the power tool 500. In some embodiments, the activation switch 545 is not included on the power tool 500 and the machine learning controller 540 is maintained in the enabled state or is controlled to be enabled and disabled via, for example, wireless signals from the server (e.g., servers 110, 210, 310, 410) or from the external device 107.

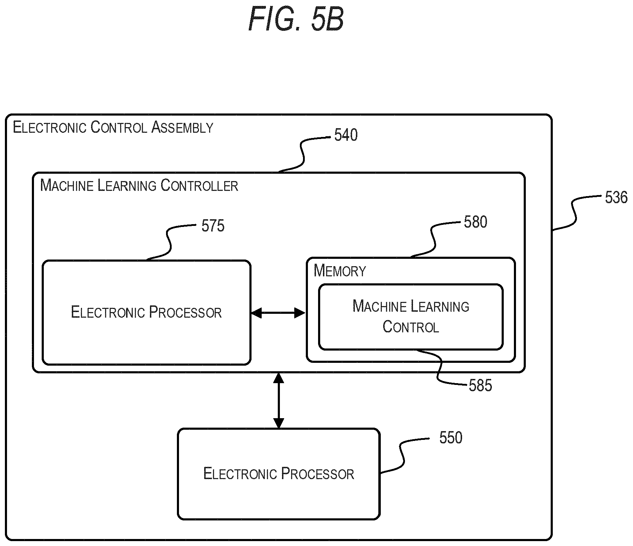

As shown in FIG. 5B, the machine learning controller 540 can include an electronic processor 575 and a memory 580. The memory 580 stores a machine learning control 585. The machine learning control 585 may include a trained machine learning program, as described above with respect to FIGS. 1-4D. In the illustrated embodiment, the electronic processor 575 includes a graphics processing unit. In the embodiment of FIG. 5B, the machine learning controller 540 is positioned on a separate printed circuit board (PCB) as the electronic processor 550 of the power tool 500. The PCB of the electronic processor 550 and the machine learning controller 540 are coupled with, for example, wires or cables to enable the electronic processor 550 of the power tool 500 to control the motor 505 based on the outputs and determinations from the machine learning controller 540. In other embodiments, however, the machine learning control 585 may be stored in memory 560 of the electronic processor 550 and may be implemented by the processing unit 557. In such embodiments, the electronic control assembly 536 includes the electronic processor 550. In some embodiments, the machine learning controller 540 is implemented in the separate electronic processor 575, but is positioned on the same PCB as the electronic processor 550 of the power tool 500. Embodiments with the machine learning controller 540 implemented as a separate processing unit from the electronic processor 550, whether on the same or different PCBs, allows selecting a processing unit to implement each of the machine learning controller 540 and the electronic processor 550 that has its capabilities (e.g., processing power and memory capacity) tailored to the particular demands of each unit. Such tailoring can reduce costs and improve efficiencies of the power tools. In some embodiments, as illustrated in FIG. 4C, for example, the external device 107 includes the machine learning controller 540 and the power tool 500 communicates with the external device 107 to receive the estimations or classifications from the machine learning controller 540. In some embodiments, the machine learning controller 540 is implemented in a plug-in chip or controller that can be added to the power tool 500. For example, the machine learning controller 540 may include a plug-in chip that is received within a cavity of the power tool 500 and connects to the electronic processor 550. For example, in some embodiments, the power tool 500 includes a lockable compartment including electrical contacts that is configured to receive and electrically connect to the plug-in machine learning controller 540. The electrical contacts enable bidirectional communication between the plug-in machine learning controller 540 and the electronic processor 550, and enable the plug-in machine learning controller 540 to receive power from the power tool 500.

As described above, the machine learning controller 540 may implement field weakening control processes or operations. Field weakening is generally used with a permanent magnet motor, such as motor 505. As the permanent magnet motor rotates, a back emf is generated in one or more windings of the motor 505, which in turn makes driving current into the motor 505 more difficult, thereby resulting in a loss of speed or torque at the output of the motor 505. In one example, field weakening is achieved by advancing the conduction angle by a specific value, known as an advance angle. The advance angle may be applied based on, for example, a present speed of the motor 505. In some examples, the advance angle is only modified once a speed threshold has been exceeded. In one embodiment, an increase in advance angle causes a corresponding increase in an overall conduction angle applied to the motor 505. However, in some examples, the conduction angle may be shifted by an amount equal to the advance angle such that the overall conduction angle remains the same. Additionally, a freewheel angle may be modified in addition to, or in conjunction with, a change in conduction angle or advance angle. Freewheeling occurs when a motor winding is disconnected from an excitation voltage provided by one or more switches within the switching network 517 and a current stored within an armature of the motor flows through one or more switches within the switching network 517 (or through one or more freewheeling diodes within the switching network 517) to a supply rail opposite the supply rail that previously provided power to the armature during the previous conduction cycle.

Some implementations of field weakening generally relied on one or more Hall-effect or other positions sensors associated with the rotor of a motor to determine when to conduct each of the transistors in a switching network, such as switching network 517. Other implementations may utilize operating parameters of the power tool 500 to modify one or more field weakening parameters to perform various field weakening operations without requiring Hall-effect or other dedicated position sensors.

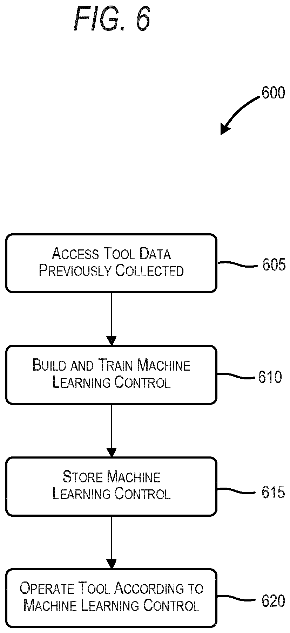

As described above with respect to FIG. 1, the machine learning control 585 may be built and operated by the server 110. In other embodiments, the machine learning control 585 may be built by the server 110, but implemented by the power tool 500 (similar to FIGS. 2 and 3), and in yet other embodiments, the power tool 500 (e.g., the electronic processor 550, electronic processor 575, or a combination thereof) builds and implements the machine learning control 585 (similar to FIG. 4B). FIG. 6 illustrates a method 600 of building and implementing the machine learning control 585. The method 600 is described with respect to power tool 500, but, as previously described with respect to FIG. 5, the power tool 500 is representative of the power tools 105, 205, 305, 405 described in the respective systems of FIGS. 1-4C. Accordingly, a similar method may be implemented by the power tool 105, 205, 305, 405 of the respective systems of FIGS. 1-4D. In step 605, an electronic processor, such as electronic processor 425, accesses tool usage information previously collected from similar power tools. For example, to build the machine learning control 585 for the impact drivers of FIGS. 1-4C and 5A, the server electronic processor 425 accesses tool usage data previously collected from other impact drivers (e.g., via the network 115). The tool usage data includes, for example, motor current, motor voltage, motor position and/or velocity, RPMs, power tool position and/or velocity, usage time, battery state of charge, position of the power tool, position or velocity of the output shaft, number of impacts, vibration level, and the like. The server electronic processor 425 then proceeds to build and train the machine learning control 585 based on the tool usage data (step 610).

Building and training the machine learning control 585 may include, for example, determining the machine learning architecture (e.g., using a logistic regression, a support vector machine, a decision tree, a neural network, or a different architecture). In the case of building and training a neural network, for example, building the neural network may also include determining the number of input nodes, the number of hidden layers, the activation function for each node, the number of nodes of each hidden layer, the number of output nodes, and the like. Training the machine learning control 585 includes providing training examples to the machine learning control 585 and using one or more algorithms to set the various weights, margins, or other parameters of the machine learning control 585 to make reliable estimations or classifications.

In some embodiments, building and training the machine learning control 585 includes building and training a recurrent neural network. Recurrent neural networks allow analysis of sequences of inputs instead of treating every input individually. That is, recurrent neural networks can base their determination or output for a given input not only on the information for that particular input, but also on the previous inputs. Using recurrent neural networks helps compensate for some of the misclassifications the machine learning control 585 would make by providing and taking account the context around a particular operation. Accordingly, when implementing a recurrent neural network, the learning rate affects not only how each training example affects the overall recurrent neural network (e.g., adjusting weights, biases, and the like), but also affects how each input affects the output of the next input.

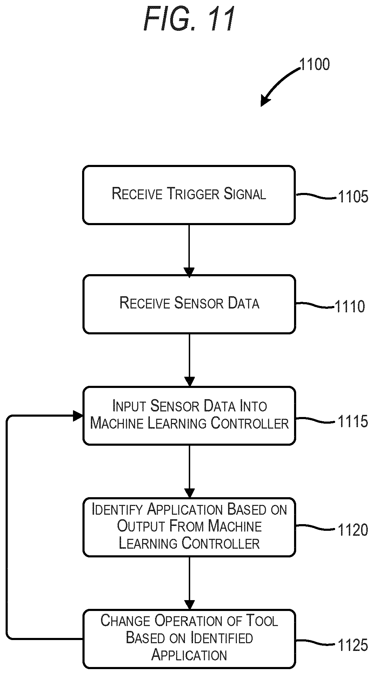

The server electronic processor 425 builds and trains the machine learning control 585 to perform a particular task. For example, in some embodiments, the machine learning control 585 is trained to identify an application of the power tool 500. In other embodiments, the machine learning control 585 is trained to detect when a detrimental condition is present or imminent (e.g., detecting when a fastener is seated). The task for which the machine learning control 585 is trained may vary based on, for example, the type of power tool 500, a selection from a user, typical applications for which the power tool is used, and the like. FIGS. 11-15 expand on additional examples of particular tasks for which the machine learning control 585 is built and trained. The server electronic processor 425 uses different tool usage data to train the machine learning control 585 based on the particular task.

In some embodiments, the particular task for the machine learning controller 540 (e.g., for the machine learning control 585) also defines the particular architecture for the machine learning control 585. For example, for a first set of tasks, the server electronic processor 425 may build a support vector machine, while, for a second set of tasks, the server electronic processor 425 may build a neural network. In some embodiments, each task or type of task is associated with a particular architecture. In such embodiments, the server electronic processor 425 determines the architecture for the machine learning control 585 based on the task and the machine learning architecture associated with the particular task.

After the server electronic processor builds and trains the machine learning control 585, the server electronic processor 425 stores the machine learning control 585 in, for example, the memory 430 of the server 110 (step 615). The server electronic processor 425, additionally or alternatively, transmits the trained machine learning control 585 to the power tool 500. In such embodiments, the power tool 500 stores the machine learning control 585 in the memory 580 of the machine learning controller 540. In some embodiments, for example, when the machine learning control 585 is implemented by the electronic processor 550 of the power tool 500, the power tool 500 stores the machine learning control 585 in the memory 560 of the electronic control assembly 536.

Once the machine learning control 585 is stored, the power tool 500 operates the motor 505 according to (or based on) the outputs and determinations from the machine learning controller 540 (step 620). In embodiments in which the machine learning controller 540 (including the machine learning control 585) is implemented in the server 110, 210, the server 110, 210 may determine operational thresholds from the outputs and determinations from the machine learning controller 540. The server 110, 210 then transmits the determined operational thresholds to the power tool 500 to control the motor 505.

The performance of the machine learning controller 540 depends on the amount and quality of the data used to train the machine learning controller 540. Accordingly, if insufficient data is used (e.g., by the server 110, 210, 310, 410) to train the machine learning controller 540, the performance of the machine learning controller 540 may be reduced. Alternatively, different users may have different preferences and may operate the power tool 500 for different applications and in a slightly different manner (e.g., some users may press the power tool 500 against the work surface with a greater force, some may prefer a faster finishing speed, and the like). These differences in usage of the power tool 500 may also compromise some of the performance of the machine learning controller 540 from the perspective of a user.

Optionally, to improve the performance of the machine learning controller 540, in some embodiments, the server electronic processor 425 receives feedback from the power tool 500 (or the external device 107) regarding the performance of the machine learning controller 540. In other words, at least in some embodiments, the feedback is with regard to the control of the motor from the earlier step 620. In other embodiments, however, the power tool 500 does not receive user feedback regarding the performance of the machine learning controller 540 and instead continues to operate the power tool 500 by executing the machine learning control 585. In some embodiments, the external device 107 may also provide a graphical user interface that receives feedback from a user regarding the operation of the machine learning controller 540. The external device 107 then transmits the feedback indications to the server electronic processor 425. In some embodiments, the power tool 500 may only provide negative feedback to the server 110, 210, 310, 410 (e.g., when the machine learning controller 540 performs poorly). In some embodiments, the server 110, 210, 310, 410 may consider the lack of feedback from the power tool 500 (or the external device 107) to be positive feedback indicating an adequate performance of the machine learning controller 540. In some embodiments, the power tool 500 receives, and provides to the server electronic processor 425, both positive and negative feedback. In some embodiments, in addition or instead of user feedback (e.g., directly input to the power tool 500), the power tool 500 senses one or more power tool characteristics via one or more sensors 530, and the feedback is based on the sensed power tool characteristic(s). As discussed above, in some embodiments, the power tool 500 may send the feedback or other information directly to the server 110, 210, 310, 410 while in other embodiments, an external device 107 may serve as a bridge for communications between the power tool 500 and the server 110, 210, 310 410 and may send the feedback to the server 110, 210, 310, 410.

In some embodiments, the machine learning control 585 includes a reinforcement learning control that allows the machine learning control 585 to continually integrate the feedback received by the user to optimize the performance of the machine learning control 585. In some embodiment, the reinforcement learning control periodically evaluates a reward function based on the performance of the machine learning control 585. In such embodiments, training the machine learning control 585 includes increasing the operation time of the power tool 500 such that the reinforcement learning control 585 receives sufficient feedback to optimize the execution of the machine learning control 585. In some embodiments, when reinforcement learning is implemented by the machine learning control 585, a first stage of operation (e.g., training) is performed during manufacturing or before such that when a user operates the power tool 500, the machine learning control 585 can achieve a predetermined minimum performance (e.g., accuracy). The machine learning control 585, once the user operates his/her power tool 500, may continue learning and evaluating the reward function to further improve its performance. Accordingly, a power tool may be initially provided with a stable and predictable algorithm, which may be adapted over time. In some embodiments, reinforcement learning is limited to portions of the machine learning control 585. For example, in some embodiments, instead of potentially updating weights/biases of the entire or a substantial portion of the machine learning control 585, which can take significant processing power and memory, the actual model remains frozen or mostly frozen (e.g., all but last layer(s) or outputs), and only one or a few output parameters or output characteristics of the machine learning control 585 are updated based on feedback.

As described above, when the machine learning controller 540 implements a recurrent neural network, the learning rate (or sometimes referred to as a "switching rate") affect how previous inputs or training examples affect the output of the current input or training example. For example, when the switching rate is high the previous inputs have minimal effect on the output associated with the current input. That is, when the switching rate is high, each input is treated more as an independent input. On the other hand, when the switching rate is low, previous inputs have a high correlation with the output of the current input. That is, the output of the current input is highly dependent on the outputs determined for previous inputs. In some embodiments, the user may select the switching rate in correlation (e.g., with the same actuator) with the learning rate. In other embodiments, however, a separate actuator (or graphical user interface element) is generated to alter the switching rate independently from the learning rate. The methods or components to set the switching rate are similar to those described above with respect to setting the learning rate.

The description of FIG. 6 focuses on the server electronic processor 425 training, storing, and adjusting the machine learning control 585. In some embodiments, however, the electronic processor 550 of the power tool 500 may perform some or all of the steps described above with respect to FIG. 6. For example, FIG. 4 illustrates an example power tool system 400 in which the power tool 405 stores and adjusts the machine learning controller 540. Accordingly, in this system 400, the electronic processor 550 performs some or all of the steps described above with respect to FIG. 6. Similarly, in some embodiments, the electronic processor 575 of the machine learning controller 540 or the external device 107 can perform some or all of the steps described above with respect to FIG. 6.

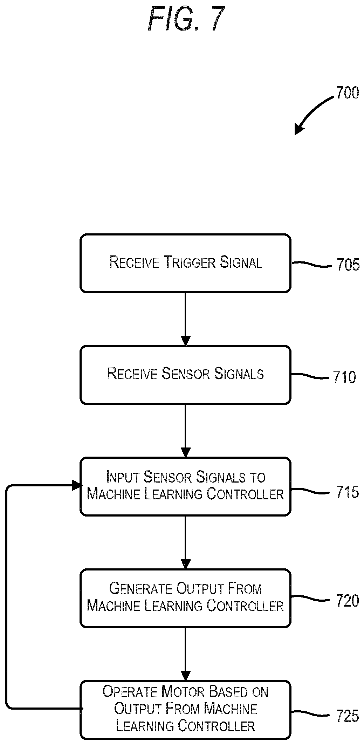

FIG. 7 is a flowchart illustrating a method 700 of operating the power tool 500 according to the machine learning controller 540 as referenced in step 620 of FIG. 6. In step 705, the power tool 500 receives a trigger signal from the trigger 510 indicating that the power tool 500 is to begin an operation. During operation of the power tool 500, the electronic processor 550 receives output sensor data (step 710) from the sensors 530. As described above, the output sensor data provide varying information regarding the operation of the power tool 500 (referred to as operational parameters) including, for example, motor position, motor speed, spindle position, spindle speed, output torque, position of the power tool 500, battery pack state of charge, date, time, time, time since last use, mode, clutch setting, direction, battery type, presence of side-handle, errors, history of past applications and switching rate, user input, external inputs, gear and the like (see, e.g., Table 3 above). The electronic processor 550 then provides at least some of the sensor data to the machine learning controller 540 (step 715). In embodiments in which the electronic processor 550 implements the machine learning control 585, the electronic processor 550 bypasses step 715. When the power tool 500 does not store a local copy of the machine learning controller 540, such as in the power tool system 100 of FIG. 1, the electronic processor 550 transmits some or all of the sensor information to the server 110 where the machine learning controller 540 analyzes the received information in real-time, approximately real-time, at a later time, or not at all.

The sensor information transmitted to the machine learning controller 540 varies based on, for example, the particular task for the machine learning controller 540. As described above, the task for the machine learning controller may vary based on, for example, the type of power tool 500. For example, in the context of an impact driver, the machine learning controller 540 for the power tool 500 may be configured to identify a type of application of the power tool 500 and may use specific operational thresholds for each type of application. In such embodiments, the electronic processor 550 may transmit, for example, the rotating speed (e.g., RPM) of the motor 505, magnitude of vibration of the power tool 500, the current of the power tool 500 (e.g., through motor 505), etc. The machine learning controller 540 then generates an output based on the received sensor information and the particular task associated with the machine learning controller 540 (step 720). For example, the machine learning program executing on the machine learning controller 540 processes (e.g., classifies according to one of the aforementioned machine learning algorithms) the received sensor information and generates an output. In the example above, the output of the machine learning controller 540 may indicate a type of application for which the power tool 500 is being used. The electronic processor 550 then operates the motor 505 based on the output from the machine learning controller 540 (step 725). For example, the electronic processor 550 may use the output from the machine learning controller 540 to determine whether any operational thresholds (e.g., starting speed, maximum speed, finishing speed, rotating direction, number of impacts, and the like) are to be changed to increase the efficacy of the operation of the power tool 500. The electronic processor 550 then utilizes the updated operational thresholds or ranges to operate the motor 505. In another example, the output may indicate a condition of the tool and the electronic processor 550 controls the motor dependent on the condition. For example, and as described in further detail below, the condition may indicate an identified application, an identified fastener associated with the power tool, an identified material associated with the tool and into which a fastener is being driven, an operation that is finished (e.g., a fastening operation is completed), etc. The motor, in turn, may be controlled to stop, to increase speed, or decrease speed based on the condition, or may be controlled in other ways based on the condition. Although the particular task of the machine learning controller 540 may change as described in more detail below, the electronic processor 550 uses the output of the machine learning controller 540 to, for example, better operate the power tool 500 and achieve a greater operating efficiency. In some embodiments, the machine learning controller 540 receives usage information associated with the tool during operation as feedback. As described above, providing such feedback allows the machine learning controller 540 to update its parameters to improve its performance.

As described above, the machine learning controller 540 is associated with one or more particular tasks. The machine learning controller 540 receives various types of information from the power tool 500 and the electronic processor 550 based on the particular task for which the machine learning controller 540 is configured. For example, FIG. 8 depicts graphs 800 that include usage information used to train the machine learning controller 540 to perform the one or more particular tasks and training results. The usage information received from the sensors 530 includes current (e.g., motor current), motor RPM, and vibration data associated with the power tool 500 (e.g., when driving a ledger lock, a deck screw, etc.) and the operation of the power tool 500 on a workpiece (e.g., pressure treated lumber). In the graphs 800, a first set of data points 805 (e.g., red data points) are associated with a first fastener (e.g., a ledger lock) and a second set of data points 810 (e.g., green data points) are associated with a second fastener (e.g., a deck screw). The data points of the graphs 800 are utilized create training examples of each class associated with the one or more particular tasks (e.g., fastening application identification). Once trained, the machine learning controller 540 receives, from the sensors 530, sensor information associated with the power tool 500, processes the sensor information, and generates an output. For example, based on the first and second sets of data points, the trained machine learning controller 540 is capable of generating an output with over 95% accuracy for identifying a type of application that is being driven by the power tool 500. Specifically, the machine learning controller 540 can distinguish between an application where the first fastener is being driven and an application where the second fastener is being driven. In some embodiments, the machine learning controller 540 makes this determination in less than two-hundred fifty milliseconds (250ms), as indicated in a vertical line 815 on the graphs 800 that plot true positive rate and accuracy of the machine learning controller 540 against time. In some embodiments, the machine learning controller 540 may also receive information regarding the battery pack type used with the power tool 500 and state of charge of the battery pack.

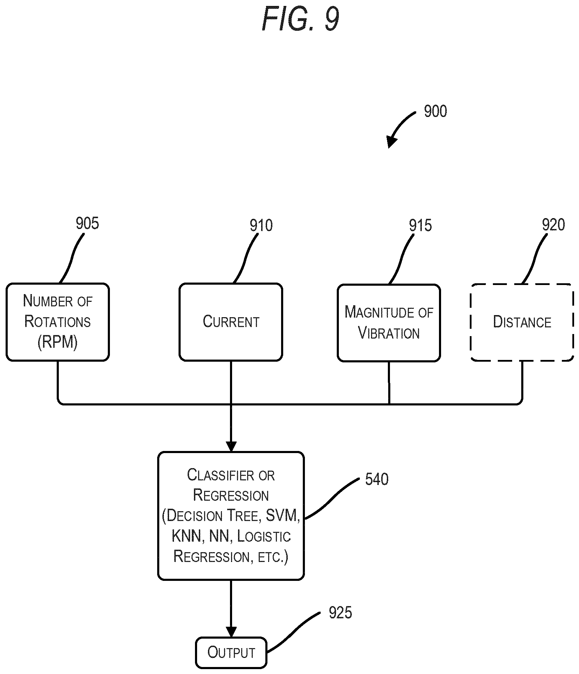

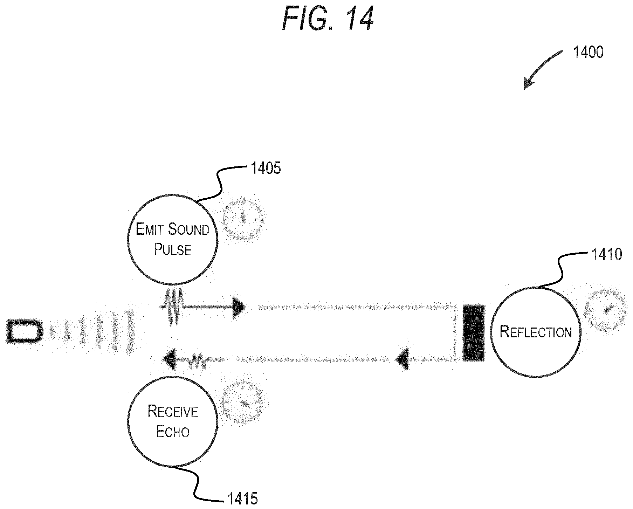

As described above, the machine learning controller 540 is associated with one or more particular tasks. The machine learning controller 540 receives various types of information from the power tool 500 and the electronic processor 550 based on the particular task for which the machine learning controller 540 is configured. For example, FIG. 9 illustrates a schematic diagram 900 of the various types of information that may be utilized by the machine learning controller 540 to generate outputs, make determinations and predictions, and the like. In the illustrated diagram, the machine learning controller 540 may receive, for example, an indication of the number of rotations (e.g., RPM) of the motor 505 of the power tool 500, current 910 (e.g., through motor 505), and magnitude of vibration 915 (e.g., of the power tool 500). In some embodiments, the machine learning controller 540 may receive a distance 920 associated with the power tool 500 depending on the task, as described in greater detail below with respect to FIG. 14. The distance 920 at a particular moment in time may indicate a position of the power tool 500 with respect to an object at the moment in time (e.g., which may indicate a depth of a fastener or drill bit into an object). Further, the distance 920 received over time (e.g., as a time series of values) may indicate a rate of change in the position (velocity) of the power tool 500 with respect to the object (e.g., which may indicate rate of change of a depth of a fastener or drill bit into an object). The rate of change in the position of the power tool 500 with respect to a workpiece (e.g., the object) may be indicative of characteristics of the power tool 500 (e.g., driving torque, driving speed, etc.), a fastener or drill bit being driven by the power tool 500 (e.g., diameter, pitch, turns per inch (TPI) of a fastener, etc.), and/or the workpiece into which the faster or drill bit is being driven (e.g., hardness of material, thickness of material, etc.). The machine learning controller 540 may also receive information regarding the battery pack type used with the power tool 500 and state of charged of the battery pack. The machine learning controller 540 uses various types and combinations of the information described above to generate various outputs 925 based on the particular task associated with the machine learning controller 540. For example, in some embodiments, the machine learning controller 540 generates suggested parameters for a particular class of fastener. The machine learning controller 540 may generate a suggested starting or finishing speed, a suggested mode torque(s), and a suggested mode ramp.

Additionally, the machine learning controller 540 may determine a likely workpiece material (e.g., whether a power tool 500 is used on wood or drywall). In some embodiments, the machine learning controller 540 can also identify particular events such as a seated fastener. In some embodiments, for example, when the machine learning controller 540 implements a recurrent neural network, the identification of a particular event is input (e.g., sent) to the machine learning controller 540 to help identify other events and/or other aspects of the operation of the power tool 500. For example, when the machine learning controller 540 determines that a first fastener is being driven, the machine learning controller 540 may then alter, for example, whether field weakening is being applied to the motor 505. In some embodiments, a default conduction angle of 120 degrees without phase advance is applied when driving the motor 505 (e.g., during normal conditions without field weakening). If field weakening is to be implemented, the conduction angle can be increased to, for example, 150 degrees (e.g., including a 10 degree phase advance angle).

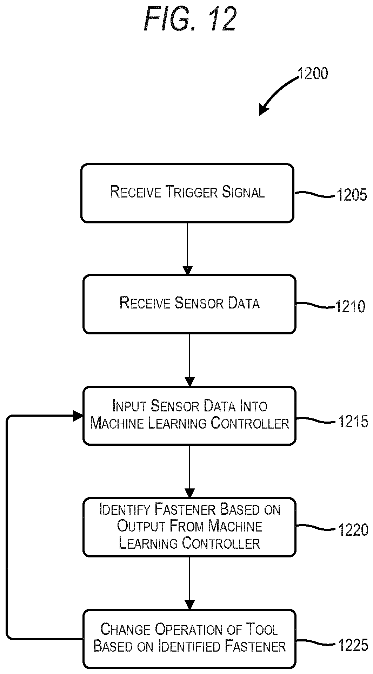

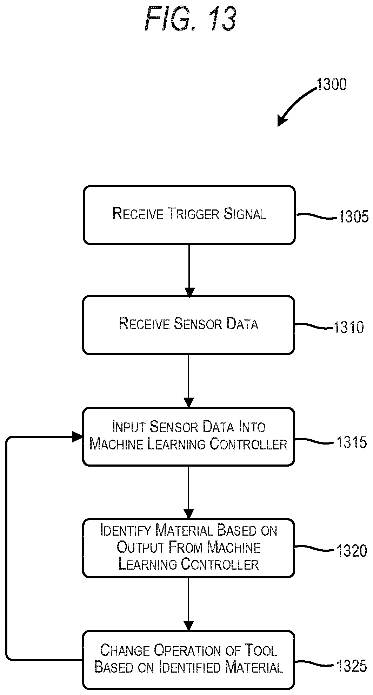

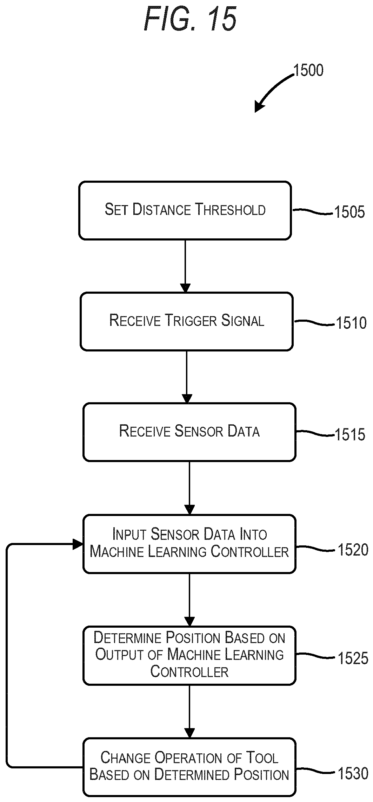

In some examples, when field weakening is implemented, the electronic control assembly 536 one or more of increases the conduction angle, employs dynamic phase advance to control the motor 505, or employs field oriented control (FOC) of the motor 505 with negative d-axis current ($i_d$) injections. The particular field weakening technique employed by the electronic control assembly 536 may vary based on a particular application detected (see, e.g., FIG. 11), a particular fastener identified (see, e.g., FIG. 12), a particular material identified (see, e.g., FIG. 13), a particular position of the power tool 500 (see, e.g., FIG. 15), and/or a health or status of the power tool 500 (e.g., a thermal state, a state of charge or health of a battery coupled to the power tool, etc.). Accordingly, in some examples, the electronic control assembly 536 may access a lookup table that maps one or more inputs (e.g., application type, fastener type, material type, tool position, health or status of the power tool) to a particular field weakening control technique (e.g., an increased conduction angle, a phase advance, and/or an FOC control with negative $i_d$ injections).

In some examples, the particular conduction angle used to drive the motor 505 may vary from 120 degrees (e.g., as a default, nominal angle for motor control without field weakening) to 180 degrees (e.g., 60 degrees added to the conduction angle). Accordingly, when field weakening is employed in this and other embodiments described herein using an increased conduction angle, the increase may be a value between 1 and 60 degrees (e.g., linearly increased in 1, 5, or 10 degree steps as an amount of field weakening desired increases), may be a value between 20-40 degrees, may be 25-35 degrees, may be 30 degrees, or another value between 1 and 60 degrees. In conduction with a conduction angle increase, the phase advance angle may be altered to center align the conduction band.

In field oriented control, motor current (e.g., on each phase of the motor) may be translated via Clarke and Park transforms to a direct-quadrature (DQ) reference frame including a direct (d)-axis and a quadrature (q)-axis (also referred to as a flux axis and torque axis, respectively). Accordingly, for example, on a three phase motor with a, b, and c phases, the current measured on each of the a, b, and c phases ($i_a$, $i_b$, $i_c$) may be translated to $i_d$ and $i_q$ currents on the DQ reference frame. A regulator (e.g., a proportional integral derivative (PID) or proportional integral (PI) controller) may receive the sensed (actual) $i_d$ and $i_q$ currents, along with target or desired $i_d$ and $i_q$ currents (e.g., generated proportional to trigger pull amount or obtained from a memory), and generate a voltage control signal for the d and q axes ($v_d$, $v_q$) to adjust the actual $i_d$ and $i_q$ currents to be at or closer to the target $i_d$ and $i_q$ currents. The voltage control signals may be translated back to the abc reference frame (e.g., as $v_a$, $v_b$, and $v_c$) using the inverse Clark and Park transforms, and the translated voltage control signals may be mapped to PWM duty cycles (e.g., via a lookup table) for PWM signals that control the switching network 517 to drive the motor 505. To implement FOC control with negative $i_d$ injections, the target d-axis current ($i_d$) may be set to a negative value or modified with a negative offset to cause a negative d-axis current ($i_d$), which weakens the motor flux or magnetic field. For example, when field weakening is employed in this and other embodiments described herein using FOC control with negative $i_d$ injections or mod index adjustments may be selected by the electronic control assembly to provide a desired or optimum driving speed (e.g., for a particular application of the power tool). Adjusting the $i_d$ with negative $i_d$ injections (e.g., using a negative offset to the target d-axis current ($i_d$) or a negative target d-axis current) may be analogous to increasing the conduction angle in a non-FOC control technique (e.g., a six step trapezoidal control technique).

As described above, the architecture for the machine learning controller 540 may vary based on, for example, the particular task associated with the machine learning controller 540. In some embodiments, the machine learning controller 540 may include a neural network, a support vector machine, decision trees, logistic regression, and other machine learning architectures. The machine learning controller 540 may further utilize kernel methods or ensemble methods to extend the base structure of the machine learning controller 540. In some embodiments, the machine learning controller 540 implements reinforcement learning to update the machine learning controller 540 based on received feedback indications.

As described above, the machine learning controller 540 may include a logistic regression model. The machine learning controller 540 can utilize the logistic regression model to determine a probability of an event taking place by calculating the log-odds of the event from a linear combination of one or more independent variables. For example, FIG. 10 depicts graph 1000 that illustrates a logistic regression curve fitted to data. The logistic regression curve shows the probability (e.g., between zero and one) of an event occurring (e.g., a binary dependent variable) based on an independent variable. In another example, the machine learning controller 540 receives sensor information (e.g., motor RPM, motor current, and magnitude of vibration) as independent variables sampled at a rate (e.g., once every fifty [50] ms) for a total period of time (e.g., a total of two-hundred fifty [250] ms for three [3] variables sampled 5 times per variable results in fifteen [15] total independent variables). In this example, the machine learning controller 540 determines or calculates the probability with an exemplary mathematical formulation as shown below:

$$Y_i = \beta_0 + \sum_i^{15} X_i * \beta_i \qquad\qquad (1)$$

$$Probability_x\,(0 \leq x \leq 1) = \frac{1}{1+e^{-Y_i}} \qquad\qquad (2)$$

where $Y_i$ is the sigmoid (e.g., the logistic function), $\beta_0$ is the offset, $\beta_i$ is the coefficient of bucket, $X_i$ is the moving average of fifty (50) ms, and $Probability_x$ is the probability.

During training of the machine learning controller 540 to identify the application of the power tool 500, the machine learning controller 540 calculates a probability to classify the different types of applications. As described above with respect to FIG. 1, the logistic regression may output a binary value that represents a classification. Once the logistic regression model is trained, the machine learning controller 540 receives the input variables (e.g., the values associated with each input variable), and calculates the probability. The output or outputs from the trained logistic regression model correspond to a particular type of application identifiable by the machine learning controller 540 (e.g., a high-torque application or a low-torque application). In some embodiments, limiting the number of input variables of the machine learning algorithm (e.g., logistic regression model), limits the amount of processing power required to implement the machine learning controller, which makes implementing the machine learning controller 540 possible with less power consumption and fewer processing resources.

Although FIGS. 9 and 10 are described with reference to the machine learning controller 540, as described with respect to FIGS. 5A-5B, in some examples, the electronic processor 550 incorporates the machine learning control 585 of the machine learning controller 540 (e.g., as computer-executable instructions in the form of a trained machine learning control program stored in the memory 560 of the electronic processor 550 that are executed by the processing unit 557) and the electronic processor 550 performs the functions thereof. Accordingly, in at least some examples, the functions of the machine learning controller 540 described with respect to FIGS. 9 and 10 may also be described more generally as being executed by the electronic control assembly 536, or one or more electronic processors thereof. Additionally, although the FIGS. 9 and 10 may be described with an example of the power tool 500 being a drill and/or driver power tool, in some examples, the power tool 500 referenced with respect to FIGS. 9 and 10 may be a power tool of another type (e.g., as noted above, the power tool 500 may be one of various types of power tools).

FIG. 11 is a flowchart illustrating a method 1100 of identifying a type of application of the power tool 500 using the machine learning controller 540. Although portions of the method 1100 are described as being executed by the electronic processor 550 or the machine learning controller 540, as described with respect to FIGS. 5A-5B, in some examples, the electronic processor 550 incorporates the machine learning control 585 of the machine learning controller 540 (e.g., as computer-executable instructions in the form of a trained machine learning control program stored in the memory 560 of the electronic processor 550 that are executed by the processing unit 557) and the electronic processor 550 performs the functions thereof. Accordingly, in at least some examples, each of the steps of the method 1100 may also be described more generally as being executed by the electronic control assembly 536, or one or more electronic processors thereof. Additionally, although the method 1100 may be described with an example of the power tool 500 being a drill and/or driver power tool, in some examples, the method 1100 is implemented by another example of the power tool 500 (e.g., as noted above, the power tool 500 may be one of various types of power tools).

At step 1105, the electronic processor 550 receives a signal from the trigger 510 indicating that the user is operating the power tool 500. The electronic processor 550 begins to operate the power tool 500 and receives sensor data from the sensors 530 (step 1110). As described above, sensor data is indicative of one or more operational parameters of the power tool and may include, for example, current drawn, motor speed (e.g., RPM), vibration information, and/or distance with respect to an object. The electronic processor 550 then sends at least a subset of the sensor data to the machine learning controller 540 (step 1115). In some embodiments, the machine learning controller 540 receives each of a motor current, a number of rotations of the motor, a magnitude of vibration for the power tool, and a distance with respect to an object. Some of the signals received by the machine learning controller 540 may be calculated by the electronic processor 550 rather than directly received from the sensors 530. The electronic processor 550 also sends these intermediary inputs (e.g., calculated or determined by the electronic processor 550 based on signals from the sensors 530) to the machine learning controller 540 as sensor data in step 1115.

The machine learning controller 540 then generates an output identifying the application in use by the power tool 500 (step 1120). As described above with respect to FIG. 1, the machine learning controller 540 can generate the output identifying the application (e.g., a high-torque application, a low-torque application, etc.) by using a logistic regression model. In other embodiments, the machine learning controller 540 may implement a different architecture to identify the application used by the power tool 500. For example, the machine learning controller 540 can receive the values for the input variables and use those values to progress across the layers of neural networks using the node connection weights and the activation functions for each node. As described above, the output layer may include one or more output nodes indicating the type of application (e.g., high-torque or low-torque) used by the power tool 500. Accordingly, in step 1120, the application type identified may be one selected from a predetermined set of potential application type classifications (e.g., high torque application type, low torque application type, etc.). In some instances, the classification is a binary classification that identifies one of two options (e.g., either high torque application type or low torque application type). In other examples, additional potential classifications are available to selection by the machine learning controller 540. As user herein, a high torque application type may refer to an application of the power tool associated with a first torque level, and a low torque application type may refer to an application of the power tool associated with a second torque level, where the first torque level is higher than the second torque level.

In step 1125, a suggested change to an operating mode of the power tool is generated based on the identified type of application. The suggested change generated is then stored in a tool profile of the memory 560 by the electronic processor 550 as an operation parameter or threshold. The suggested change is generated by an electronic processor that receives the identified type of application from the machine learning controller 540, such as the electronic processor implementing the machine learning controller 540 or another electronic processor that is not implementing the machine learning controller 540, which, depending on the embodiment may be the electronic processor 550, an electronic processor of the external device 107 (FIG. 4C), or the server electronic processor 425. The suggested change may be generated using the identified type of application as an input to a lookup table (stored in memory associated with the particular electronic processor) that maps application types to suggested operation parameters of the power tool 500. In some embodiments, the operation parameter is field weakening control, and the electronic processor is configured to enable field weakening control or disable field weakening control based on the determined application (e.g., activate field weakening when in a high-torque application). By controlling the activation of field weakening, the corresponding high-torque application can be completed more quickly (e.g., 40% more quickly) without overdriving a fastener. In some embodiments, a default conduction angle of 120 degrees is applied. If field weakening is to be implemented, the conduction angle can be increased to, for example, 150 degrees (e.g., including a 10 degree phase advance angle).

In some examples, when field weakening is implemented, the electronic control assembly 536 one or more of increases the conduction angle, employs dynamic phase advance to control the motor 505, or employs field oriented control (FOC) of the motor 505 with negative d-axis current (id) injections. The particular field weakening technique employed by the electronic control assembly 536 may vary based on the application detected and/or a health or status of the power tool 500 (e.g., a thermal state, a state of charge or health of a battery coupled to the power tool, etc.). Accordingly, in some examples, the electronic control assembly 536 may access a lookup table that maps one or more inputs (e.g., application type and/or health or status of the power tool) to a particular field weakening control technique (e.g., an increased conduction angle, a phase advance, and/or an FOC control with negative id injections).

Similarly, during training of the machine learning controller 540 to identify the type of fastener, the machine learning controller 540 calculates a probability to classify the different types of fasteners. As described above with respect to FIG. 1, the logistic regression model may output a binary value that represents a classification. Once the logistic regression model is trained, the machine learning controller 540 receives the input variables (e.g., the values associated with each input variable), and calculates the probability. The output or outputs from the trained logistic regression model correspond to a particular type of fastener identifiable by the machine learning controller 540.

FIG. 12 is a flowchart illustrating a method 1200 of identifying a type of fastener using the machine learning controller 540. Although portions of the method 1200 are described as being executed by the electronic processor 550 or the machine learning controller 540, as described with respect to FIGS. 5A-5B, in some examples, the electronic processor 550 incorporates the machine learning control 585 of the machine learning controller 540 (e.g., as computer-executable instructions in the form of a trained machine learning control program stored in the memory 560 of the electronic processor 550 that are executed by the processing unit 557) and the electronic processor 550 performs the functions thereof. Accordingly, in at least some examples, each of the steps of the method 1200 may also be described more generally as being executed by the electronic control assembly 536, or one or more electronic processors thereof. Additionally, although the method 1200 may be described with an example of the power tool 500 being a drill and/or driver power tool, in some examples, the method 1200 is implemented by another example of the power tool 500 that drive, operate on, or otherwise interact with a fastener (e.g., as noted above, the power tool 500 may be one of various types of power tools).

At step 1205, the electronic processor 550 receives a signal from the trigger 510 indicating that the user is operating the power tool 500. The electronic processor 550 begins to operate the power tool 500 and receiving sensor data from the sensors 530 (step 1210). As described above, sensor data is indicative of one or more operational parameters of the power tool and may include, for example, current drawn, motor speed (e.g., RPM), vibration information, and/or distance with respect to an object. The electronic processor 550 then sends at least a subset of the sensor data to the machine learning controller 540 (step 1215). In some embodiments, the machine learning controller 540 receives each of motor current, number of rotations of the motor, magnitude of vibration of the power tool 500, and distance with respect to an object. Some of the signals received by the machine learning controller 540 may be calculated by the electronic processor 550 rather than directly received from the sensors 530. The electronic processor 550 also sends these intermediary inputs (e.g., calculated or determined by the electronic processor 550 based on signals from the sensors 530) to the machine learning controller 540 as sensor data in step 1215.

The machine learning controller 540 then generates an output identifying the type of fastener in use by the power tool 500 (step 1220). In some embodiments, the machine learning controller 540 generates the output identifying the type of fastener by using a logistic regression model. In other embodiments, the machine learning controller 540 may implement a different architecture to identify the fastener used by the power tool 500. For example, the machine learning controller 540 receives the values for the input variables and uses these values to progress across the layers of the neural networks using the node connection weights and the activation functions for each node. As described above, the output layer may include one or more output nodes indicating the type of fastener (e.g., ledgerlok, deck screw, etc.) used by the power tool 500. Accordingly, in step 1220, the fastener type identified may be one selected from a predetermined set of potential fastener type classifications (e.g., a first fastener type, a second fastener type, etc.). In some instances, the classification is a binary classification that identifies one of two options (e.g., either a first fastener type or second fastener type). In other examples, additional potential classifications are available to selection by the machine learning controller 540 (e.g., first, second, third, fourth, or more fastener types). As user herein, a first fastener type may be a fastener type associated with higher torque applications and a second fastener type may a fastener type associated with lower torque applications. For example, a ledgerlok fastener may be associated with higher torque applications than a deck screw.

In step 1225, a suggested change to an operating mode of the power tool is generated based on the identified type of fastener. The suggested change generated is then stored in a tool profile of the memory 560 by the electronic processor 550 as an operation parameter or threshold. The suggested change is generated by an electronic processor that receives the identified type of application from the machine learning controller 540, such as the electronic processor implementing the machine learning controller 540 or another electronic processor that is not implementing the machine learning controller 540, which, depending on the embodiment may be the electronic processor 550, an electronic processor of the external device 107, or the server electronic processor 425. The suggested change may be generated using the identified type of fastener as an input to a lookup table (stored in memory associated with the particular electronic processor) that maps fastener types to suggested operation parameters of the power tool 500. In some embodiments, the operation parameter is field weakening control, and the electronic processor is configured to enable field weakening control or disable field weakening control based on the determined fastener type (e.g., activate field weakening when driving a ledgerlok). By controlling the activation of field weakening, the corresponding operation to drive the fastener be completed more quickly (e.g., 40% more quickly) without overdriving a fastener. If, for example, the same control were applied to a deck screw, the power tool 500 could overdrive the fastener into a material. In some embodiments, a default conduction angle of 120 degrees is applied. If field weakening is to be implemented, the conduction angle can be increased to, for example, 150 degrees (e.g., including a 10 degree phase advance angle).

In some examples, when field weakening is implemented, the electronic control assembly 536 one or more of increases the conduction angle, employes dynamic phase advance to control the motor 505, or employs field oriented control (FOC) of the motor 505 with negative d-axis current ($i_d$) injections. The particular field weakening technique employed by the electronic control assembly 536 may vary based on the fastener identified and/or a health or status of the power tool 500 (e.g., a thermal state, a state of charge or health of a battery coupled to the power tool, etc.). Accordingly, in some examples, the electronic control assembly 536 may access a lookup table that maps one or more inputs (e.g., fastener type and/or health or status of the power tool) to a particular field weakening control technique (e.g., an increased conduction angle, a phase advance, and/or an FOC control with negative $i_d$ injections).

Similarly, during training of the machine learning controller 540 to identify the material of the workpiece of the power tool 500, the machine learning controller 540 calculates a probability to classify the different types of materials. In some embodiments, a logistic regression may output a binary value that represents a classification. Once the logistic regression model is trained, the machine learning controller 540 receives the input variables (e.g., the values associated with each input variable), and calculates the probability. The output or outputs from the trained logistic regression model correspond to a particular type of material identifiable by the machine learning controller 540 (e.g., the material into which a fastener is being driven).

FIG. 13 is a flowchart illustrating a method 1300 of identifying a type of material of the workpiece associated with the power tool 500 using the machine learning controller 540. Although portions of the method 1300 are described as being executed by the electronic processor 550 or the machine learning controller 540, as described with respect to FIGS. 5A-5B, in some examples, the electronic processor 550 incorporates the machine learning control 585 of the machine learning controller 540 (e.g., as computer-executable instructions in the form of a trained machine learning control program stored in the memory 560 of the electronic processor 550 that are executed by the processing unit 557) and the electronic processor 550 performs the functions thereof. Accordingly, in at least some examples, each of the steps of the method 1300 may also be described more generally as being executed by the electronic control assembly 536, or one or more electronic processors thereof. Additionally, although the method 1300 may be described with an example of the power tool 500 being a drill and/or driver power tool, in some examples, the method 1300 is implemented by another example of the power tool 500 (e.g., as noted above, the power tool 500 may be one of various types of power tools).

At step 1305, the electronic processor 550 receives a signal from the trigger 510 indicating that the user is operating the power tool 500. The electronic processor 550 begins to operate the power tool 500 and receives sensor data from the sensors 530 (step 1310). As described above, sensor data is indicative of one or more operational parameters of the power tool and may include, for example, motor current, motor speed (e.g., RPM), vibration information, and/or distance with respect to an object. The electronic processor 550 then sends at least a subset of the sensor data to the machine learning controller 540 (step 1315). In some embodiments, the machine learning controller 540 receives each of the motor current, number of rotations of the motor, magnitude of vibration of the power tool, power consumption, and distance with respect to an object. Some of the signals received by the machine learning controller 540 may be calculated by the electronic processor 550 rather than directly received from the sensors 530. For example, the machine learning controller 540 calculates the power consumption of the power tool 500 using a state of charge (e.g., voltage) and a current discharge of a battery connected to the power interface 515. Also, the machine learning controller 540 may calculate the power consumption of the power tool 500 as a function of distance measurements related to the power tool 500 and a workpiece, as described herein. The electronic processor 550 also sends these intermediary inputs (e.g., calculated or determined by the electronic processor 550 based on signals from the sensors 530) to the machine learning controller 540 as sensor data in step 1315.

The machine learning controller 540 then generates an output identifying the material associated with a workpiece of the power tool 500 (step 1320). In some embodiments, the machine learning controller 540 generates the output identifying the material by using a logistic regression model. In other embodiments, the machine learning controller 540 may implement a different architecture to identify the material associated with a workpiece of the power tool 500. For example, the machine learning controller 540 receives the values for the input variables and uses these values to progress across the layers of the neural networks using the node connection weights and the activation functions for each node. As described above, the output layer may include one or more output nodes indicating the type of material (e.g., soft wood, hard wood, steel, etc.) associated with a workpiece of the power tool 500. Accordingly, in step 1320, the work material type identified may be one selected from a predetermined set of potential work material type classifications (e.g., soft work material type, hard work material type, etc.). In some instances, the classification is a binary classification that identifies one of two options (e.g., either hard work material type or soft work material type). In other examples, additional potential classifications are available to selection by the machine learning controller 540 (e.g., soft wood, hard wood, steel, etc.). As user herein, a hard work material type may refer to an work material being worked or operated on by the power tool associated with a first hardness level, and a soft work material type may refer to a work material associated with a second hardness level, where the first hardness level is higher than the second hardness level.

In step 1325, a suggested change to an operating mode of the power tool is generated based on the identified type of material. The suggested change generated is then stored in a tool profile of the memory 560 by the electronic processor 550 as an operation parameter or threshold. The suggested change is generated by an electronic processor that receives the identified type of material from the machine learning controller 540, such as the electronic processor implementing the machine learning controller 540 or another electronic processor that is not implementing the machine learning controller 540, which, depending on the embodiment may be the electronic processor 550, an electronic processor of the external device 107, or the server electronic processor 425. The suggested change may be generated using the identified type of material as an input to a lookup table (stored in memory associated with the particular electronic processor) that maps material types to suggested operation parameters of the power tool 500. In some embodiments, the operation parameter is field weakening control, and the electronic processor is configured to enable field weakening control or disable field weakening control based on the determined type of material (e.g., activate field weakening when driving a fastener into a hard material). By controlling the activation of field weakening, the corresponding operation to drive the fastener be completed more quickly (e.g., 40% more quickly) without overdriving a fastener. If, for example, the same control were applied to a softer material, the power tool 500 could overdrive the fastener into a material. In some embodiments, a default conduction angle of 120 degrees is applied. If field weakening is to be implemented, the conduction angle can be increased to, for example, 150 degrees (e.g., including a 10 degree phase advance angle).

In some examples, when field weakening is implemented, the electronic control assembly 536 one or more of increases the conduction angle, employes dynamic phase advance to control the motor 505, or employs field oriented control (FOC) of the motor 505 with negative d-axis current ($i_d$) injections. The particular field weakening technique employed by the electronic control assembly 536 may vary based on the material identified and/or a health or status of the power tool 500 (e.g., a thermal state, a state of charge or health of a battery coupled to the power tool, etc.). Accordingly, in some examples, the electronic control assembly 536 may access a lookup table that maps one or more inputs (e.g., material type, and/or health or status of the power tool) to a particular field weakening control technique (e.g., an increased conduction angle, a phase advance, and/or an FOC control with negative $i_d$ injections).

In some embodiments, the machine learning controller 540 may receive a distance 920 associated with the power tool 500. For example, FIG. 14 illustrates a schematic diagram 1400 of a distance measurement that may be utilized by the machine learning controller 540 to generate outputs, make determinations and predictions, and the like. In the schematic diagram 1400, the power tool emits a sound pulse sent from a source 1405 (e.g., transmitter). An object 1410 in the operating environment of the power tool reflects the sound pulse that is emitted. A receiver 1415 detects the sound pulse that is reflected. The power tool 500 processes (e.g., with the electronic processor 550, 575) the time of flight ("TOF") of the sound pulse that is emitted to determine a distance of the power tool in relation to the object that reflects the sound pulse. For example, the object can be a workpiece or work material into which a fastener is being driven. When the power tool 500 determines that the power tool has moved a particular distance, the power tool 500 can be turned off to prevent overdriving of the fastener.

During training of the machine learning controller 540 to determine a position of the power tool 500, the machine learning controller 540 calculates a probability to classify the position of the power tool 500 (e.g., how far the power tool 500 is away from an object or surface). In some embodiments, a logistic regression may output a binary value that represents a classification (e.g., is driving of fastener complete). Once the logistic regression model is trained, the machine learning controller 540 receives the input variables (e.g., the values associated with each input variable), and calculates the probability. The output or outputs from the trained logistic regression model correspond to a position of the power tool 500 determinable by the machine learning controller 540.

FIG. 15 is a flowchart illustrating a method 1500 of determining a position of the power tool 500 using the machine learning controller 540. Although portions of the method 1500 are described as being executed by the electronic processor 550 or the machine learning controller 540, as described with respect to FIGS. 5A-5B, in some examples, the electronic processor 550 incorporates the machine learning control 585 of the machine learning controller 540 (e.g., as computer-executable instructions in the form of a trained machine learning control program stored in the memory 560 of the electronic processor 550 that are executed by the processing unit 557) and the electronic processor 550 performs the functions thereof. Accordingly, in at least some examples, each of the steps of the method 1500 may also be described more generally as being executed by the electronic control assembly 536, or one or more electronic processors thereof.

At step 1505, the electronic processor 550 receives a signal (a distance threshold setting indication) from the trigger 510 indicating that the user is setting an initial predefined position of the power tool 500. For example, the user positions the power tool 500 at a predetermined distance (e.g., zero distance that indicates a fastener is seated) from an object (e.g., a workpiece) and briefly pulls the trigger, which causes the electronic processor 550 to receive the distance threshold setting indication. In response to receiving the distance threshold setting indication, the electronic control assembly 536 may determine a current distance as the initial predefined position between the power tool 500 and the object to set the initial predefined position. For example, to determine the current distance, the electronic control assembly 536 may receive sensor data from the sensors 530, process the sensor data with the machine learning controller 540, and determine the current distance based on the output of the machine learning controller 540 (e.g., in a similar manner as described in further detail with respect to steps 1515, 1520, and 1525). In some implementations, an accessory (e.g., a chuck, bit, or the like) is coupled to the power tool 500 when the initial predefined position of the power tool 500 is set. Because the length of accessories vary by type, and the type of accessory coupled to the power tool 500 may be changed by a user, determining the initial predefined position can calibrate the power tool 500 and the machine learning controller 540 for a given accessory and application, and initialize the power tool 500 and machine learning controller 540 for the remainder of the method 1500. In some examples, the initial predefined position of the power tool 500 may be a default value from the memory 560, 580 or a value selected (e.g., based on user input) from several default predetermined values in the memory 560, 580.

At step 1510, the electronic processor 550 receives a signal from the trigger 510 indicating that the user is operating the power tool 500. The electronic processor 550 begins to operate the power tool 500 and receive sensor data from the sensors 530 (step 1515). As described above, sensor data is indicative of one or more operational parameters of the power tool and may include, for example, current drawn, motor speed (e.g., RPM), vibration information, and distance.

At step 1520, the electronic processor 550 then sends at least a subset of the sensor data to the machine learning controller 540. In some embodiments, the machine learning controller 540 receives each of a motor current, a number of rotations of the motor, a magnitude of vibration, and distance as the sensor data. In some embodiments, the machine learning controller 540 only receives the distance as the sensor data (e.g., to reduce the complexity of model or process or reduce resources employed for the model or process). By using additional types of sensor data (e.g., motor current, a number of rotations of the motor, e.g., and/or a magnitude of vibration), the machine learning controller 540 may improve accuracy and/or performance. For example, a rate of descent of a fastener (how quickly a fastener reaches flush to surface) may vary depending on various factors (e.g., type of battery, mode diameter of the fastener, pitch of the fastener, or the like). Accordingly, by including additional types of sensor data, the machine learning controller 540 may infer and adapt to these details. Some of the signals received by the machine learning controller 540 may be calculated by the electronic processor 550 rather than directly received from the sensors 530. The electronic processor 550 also sends these intermediary inputs (e.g., calculated or determined by the electronic processor 550 based on signals from the sensors 530) to the machine learning controller 540 as sensor data in step 1520.

In step 1525, the electronic control assembly 536 determines a position of the power tool 500 based on an output of the machine learning controller 540. For example, the machine learning controller 540 may generate an output (e.g., indicating the position of the power tool 500 and/or a seating status of a fastener being driven by the power tool 500). More particularly, the machine learning controller 540 may process the sensor data that the machine learning controller 540 received to generate the output. In some examples, the machine learning controller 540 may process the initial predefined position in addition to the sensor data to generate the output. For example, the machine learning controller 540 may process the sensor data, or the sensor data and the initial predefined position, with a trained machine learning model to generate the output. In some embodiments, the machine learning controller 540 generates the output indicating the position of the power tool 500 by using a logistic regression model (as the trained machine learning model). In other embodiments, the machine learning controller 540 may implement a different architecture of trained machine learning model to identify the position of the power tool 500. For example, the machine learning controller 540 receives the values for the input variables and uses these values to progress across the layers of the neural networks using the node connection weights and the activation functions for each node. As described above, the output layer may include one or more output nodes indicating the position (e.g., zero-position or non-zero position) of the power tool 500 (e.g., with respect to a workpiece or work surface). The position-indicating output may be a binary output (e.g., zero-position or non-zero position) or may be a distance measurement (e.g., in centimeters, inches, or another unit of measurement). When the position output is a distance measurement, the electronic control assembly 536 (e.g., the machine learning controller 540 or the electronic processor 550) may compare the distance measurement to the initial predefined position, which may serve as a threshold that delineates whether the power tool position is at a zero-position or non-zero position. For example, the initial predefined position may be a low value threshold and, as an operation (e.g., fastening or drilling) of the power tool 500 progresses, the position output (distance measurement) may generally decline overtime. The electronic control assembly 536 may determine that the position of the power tool 500 is at the zero-position when the distance measurement reaches the low value threshold of the initial predefined position. And, as previously noted, the zero-position may indicate that a fastener being driven by the power tool 500 is seated, while a non-zero position may indicate that a fastener being driven by the power tool 500 is not seated; thus, the output may indicate a seating status of a fastener being driven by the power tool 500. Additionally, the electronic control assembly 536 may determine, based on the output, that the position of the power tool is at the initial predefined position (e.g., when, as described, the output is a binary output that indicates zero-position or a distance measurement that has reached the initial predefined position).

In step 1530, a suggested change to an operating mode of the power tool is generated based on the output indicating the position of the power tool 500. The suggested change generated is then stored in a tool profile of the memory 560 by the electronic processor 550 as an operation parameter or threshold. The suggested change is generated by an electronic processor that receives the indicated position of the power tool 500 from the machine learning controller 540, such as the electronic processor implementing the machine learning controller 540 or another electronic processor that is not implementing the machine learning controller 540, which, depending on the embodiment may be the electronic processor 550, an electronic processor of the external device 107, or the server electronic processor 425. The suggested change may be generated using the indicated position as an input to a lookup table (stored in memory associated with the particular electronic processor) that maps position types (e.g., zero-position, non-zero position, or various distance measurement values) to suggested operation parameters of the power tool 500. For example, the change in operation can include stopping operation of the power tool 500 (e.g., motor 505), braking the motor 505, applying field weakening to the motor 505, pulsing the motor 505, reducing a speed of the motor 505, etc. For example, when the power tool 500 is determined to have moved a particular distance or has come within a particular proximity of an object or surface, the electronic processor can stop operation of the motor 505 regardless of whether the trigger signal is still being received.

Accordingly, in step 1530, for example, the electronic control assembly 536 may control the motor 505 based on the output that indicates the position of the power tool 500. For example, the electronic control assembly 536 may determine that the indicated position of the power tool 500 is at the zero-position in step 1525 and, in response, in step 1530, the electronic control assembly 536 may stop the motor 505 (regardless of whether the trigger signal is still being received). Stopping the motor 505 may include active braking of the motor 505 by the electronic control assembly 536 and/or ceasing driving of the motor 505 (enabling the motor 505 to coast to a stop). Pulsing the motor 505 may include the electronic control assembly 536 intermittently driving the motor 505 (e.g., alternatively between driving the motor 505 for a short time period and then enabling the motor 505 to coast for a short time period, where the short time period may be 100 ms, 200 ms, 500 ms, etc.). By pulsing the motor, a user may recognize (e.g., see, hear, and/or feel) the control change being employed and more finely control the power tool 500 to complete the present operation. Reducing a speed of the motor 505 may include the electronic control assembly 536 reducing a duty cycle of pulse-width modulated (PWM) signal(s) driving the switching network 517 that drives the motor 505 (see FIG. 5A), The reduction of the duty cycle may be steady or linear. By reducing the motor speed, a user may recognize (e.g., see, hear, and/or feel) the control change being employed and more finely control the power tool 500 to complete the present operation. In another example, the electronic control assembly 536 may determine that the indicated position of the power tool 500 is at a particular non-zero position in step 1525 and, in response, in step 1530, the electronic control assembly 536 may control the motor 505 by applying field weakening to the motor 505 (e.g., as previously described herein). For example, when field weakening is implemented, the electronic control assembly 536 one or more of increases the conduction angle, employes dynamic phase advance to control the motor 505, or employs field oriented control (FOC) of the motor 505 with negative d-axis current ($i_d$) injections. The particular field weakening technique employed by the electronic control assembly 536 may vary based on the output of the machine learning controller 540. Accordingly, in some examples, the electronic control assembly 536 may access a lookup table that maps one or more inputs (e.g., the output of the machine learning controller 540 or the position or seating status indicated by the output) to a particular field weakening control technique (e.g., an increased conduction angle, a phase advance, and/or an FOC control with negative $i_d$ injections).

FIGS. 11-15 describe various implementations of the machine learning controller 540 (e.g., where the machine learning controller 540 is associated with different tasks or operations) that can be implemented individually or as various combinations. In each of the example uses of FIG. 11-15, the power tool 500 may provide feedback as discussed above with respect to step 725 of FIG. 7. When the machine learning controller 540 receives positive or negative feedback from the power tool 500, the machine learning controller 540 re-trains the machine learning control 585, and then proceeds to implementing the re-trained machine learning control 585.

In FIGS. 11-15 , the electronic processor 550 changes operation of the power tool 500 based on the received output from the machine learning controller 540. For example, the electronic processor 550 changes speed of the motor 505 (e.g., using field weakening), changes the current or power to the motor 505 (e.g., stopes the motor 505), or the like. For example, the speed, current, power, or other operating parameter of the power tool 500 are changed according to the application type, fastener type, material type, distance to object, etc., to improve efficiency of power consumption, motor speed, or battery and/or tool life. In some embodiments, in response to the machine learning controller 540 outputting the most likely application, fastener, material, and/or distance associated with the power tool 500, the electronic processor 550 selects a corresponding operating mode profile stored on the power tool 500 or external device 107 based on the output from the machine learning controller 540 (e.g., using a lookup table), and controls the motor 505 according to the selected operating mode profile.

As described above with respect to FIGS. 1-15, the machine learning controller 540 has various applications and can provide the power tool 500 with an ability to analyze various types of sensor data and received feedback. Generally, the machine learning controller 540 may provide various levels of information and usability to the user of the power tool 500. For example, in some embodiments, the machine learning controller 540 analyzes usage data from the power tool 500 and provides analytics that help the user make more educated decisions. In other embodiments, the machine learning controller 540 generates specific parameters (e.g., coefficients) and thresholds for the electronic processor 550 to use when controlling the motor 505. In yet other embodiments, the machine learning controller 540 classifies or identifies specific conditions of the operation of the power tool 500 and provides the identification or classification output to the electronic processor 550. The electronic processor 550 may then determine, based on the output from the machine learning controller 540, which parameters and thresholds to use to optimize the operation of the power tool 500. Additionally, although some implementations of the machine learning controller 540 were illustrated and discussed in detail above, the machine learning controller 540 may be implemented in other power tools and may include different functionality. Additionally, the machine learning controller 540 may be implemented in power tools which are used by a plurality of users. Table 4 below lists a plurality of different implementations or applications of the machine learning controller 540. For each application, Table 4 lists various inputs to the machine learning controller 540 that would allow the machine learning controller 540 to provide the listed output(s). The inputs are provided by various sources, such as the sensors 530, as described above.

| Table 4 | | |
|---|---|---|
| **Machine Learning Application** | **Potential Inputs to Machine Learning Controller** | **Potential Output(s) from Machine Learning Controller** |
| Fastener identifier | Motion sensor(s) and/or running data (e.g., motor current, magnitude of vibration, number of motor rotations) | Fastener type (classification) |
| Fastener seated | Motion sensor(s) and/or running data (e.g., motor current, magnitude of vibration, number of motor rotations, position information) Optionally mode knowledge, past use | Fastener seated or near seated indication (used to stop or slow motor, begin state such as pulsing, increase kickback sensitivity temporarily, depth stopping (with radio frequency [RF] sensor), etc.) |

(continued)

| Machine Learning Application | Potential Inputs to Machine Learning Controller | Potential Output(s) from Machine Learning Controller |
|---|---|---|
| Material identifier | Motion sensor(s) and/or running data (e.g., motor current, magnitude of vibration, number of motor rotations, position information) | Material type (used as control signal to electronic processor 550, which responds by, e.g., Lower RPM, clutching out, backing motor off, updating settings, and/or pulsing motor) |
| Tool application identification (drills, impacts, saws, and others); Identification of accessory type or condition | Motion sensor(s) and/or running data (e.g., motor current, magnitude of vibration, number of motor rotations, position information) Optionally past tool use, knowledge of likely applications (such as trade, common materials, etc.), sound (for material identifications), vibration patterns, nearby tools and/or their recent use, learning rate input or on/off switch, battery presence and properties, user gear selection, direction input, clutch settings, presence of tool attachments (like side handle), nearby tool use, location data | The output is one or more of tweaking of settings, switching modes or profiles (for example, as combinations of profiles), auto-gear selection, change or activation of output (e.g., reduce saw output if hit nail, turn on orbital motion if softer material, turn off after break through, etc.), use/accessory analytics; tool bit, blade, or socket identification and condition detection; workpiece fracturing; detection of hardness, density, and location of contacted objects; detection of uncentered applications, slippage, improper die and crimp combinations; condition and identification of sanding material; suspended or level sanding position; detection of studs; tire burst or leak condition; detection of vacuum clogs, suction surface, and orientation; detection of pumping fluid characteristics; and identification of application, material type, material characteristic material condition, accessory type, accessory condition, power tool event, power tool context, and/or rating of power tool performance |
| Ideal charging rates | Past tool / battery use, time of day, stage of construction, battery charge states, presence of batteries | A charger may reduce speed of charging if the charger does not think a rapid charge will be necessary for a user (may extend overall battery life) |
| Ideal output (e.g., for a string trimmer) Note: similar for sanders/grinders/many saws, hammering devices, energy needed for nailers, grease gun/soldering iron / glue gun output | Running and motion data, timing | Detection of contact (resistance) helps to determine height of user as well as typical angle / motion for expecting contact. Running model of string length can help to optimize speed for consistent performance |
| Characteristic positive or negative feedback | Tool motion, restarts, or changes in input, trigger depression, tool shaking, feedback buttons | This can feed many other machine learning control blocks and logic flows as well as provide useful analytics on user satisfaction |

Accordingly, as described above with respect to FIGS. 1-15, the machine learning controller 540 can provide the power tool 500 with an ability to analyze various types of sensor data and provide feedback to the user by one or more of implementing or suggesting changes to an operational mode of the power tool 500, changing the operation of the power tool 500, etc.

One or more embodiments are described and illustrated in the following description and accompanying drawings. These embodiments are not limited to the specific details provided herein and may be modified in various ways. Furthermore, other embodiments may exist that are not described herein. Also, functions performed by multiple components may be consolidated and performed by a single component. Similarly, the functions described herein as being performed by one component may be performed by multiple components in a distributed manner. Additionally, a component described as performing particular functionality may also perform additional functionality not described herein. For example, a device or structure that is "configured" in a certain way is configured in at least that way but may also be configured in ways that are not listed. Features which are described in the context of separate embodiments may be provided in combination in a single embodiment. Conversely, various features which are, for brevity, described in the context of a single embodiment, may also be provided separately or in any suitable sub-combination. The applicant hereby gives notice that new claims may be formulated to such features and/or combinations of such features during the prosecution of the present application or of any further application derived therefrom. Features of the power tool described may be incorporated into/used in a corresponding method and vice versa.

As used in the present application, "non-transitory computer-readable medium" comprises all computer-readable media but does not consist of a transitory, propagating signal. Accordingly, non-transitory computer-readable medium may include, for example, a hard disk, a CD-ROM, an optical storage device, a magnetic storage device, a ROM (Read Only Memory), a RAM (Random Access Memory), register memory, a processor cache, or any combination thereof.

In addition, the phraseology and terminology used herein is for the purpose of description and should not be regarded as limiting. For example, the use of "comprising," "including," "containing," "having," and variations thereof herein is meant to encompass the items listed thereafter and equivalents thereof as well as additional items. Additionally, the terms "connected" and "coupled" are used broadly and encompass both direct and indirect connecting and coupling and may refer to physical or electrical connections or couplings. Furthermore, the phase "and/or" used with two or more items is intended to include the items individually and the items together. For example, "a and/or b" is intended to include: a (and not b); b (and not a); and a and b. Additionally, as used herein, the phrases "at least one of' and "one or more of" followed by a list of two or more items (whether connected by "and" or "or") should be understood to mean one of any of the items alone or a combination of more than one of the items. For example, "at least one of a and b," "at least one of a or b," "one or more of a and b," and "one or more of a or b," and similar phrases should be understood to include: a (and not b); b (and not a); and a and b. As used herein, the terms "substantially," "approximately," and the like may refer to a value that is + or - 1% (i.e., plus or minus 1 percent), + or - 5%, + or - 10% of the intended amount, value, angle, or other quantity.

Thus, embodiments described herein provide, among other things, power tools and related systems including a machine learning controller to control a feature or function of the power tool or related system. Various features and advantages of the embodiments are set forth in the following claims.

Examples

The disclosure may be further understood by way of the following examples:

Example 1: A method, apparatus, and non-transitory computer-readable medium for motor control comprises: a power tool comprising: a housing; a trigger; a motor supported by the housing; a battery pack interface configured to receive a battery pack; a sensor supported by the housing and configured to generate sensor data associated with the power tool, wherein the sensor data indicates a distance of the power tool in relation to an object; and an electronic control assembly including a processor and a memory, the electronic control assembly supported by the housing and connected to the motor, wherein the electronic control assembly is configured to: receive the sensor data; process the sensor data, using a machine learning control program executed on the processor; generate, using the machine learning control program, an output based on the sensor data; and control the motor based on the output.

Example 2: The method, apparatus, and non-transitory computer-readable medium for motor control of Example 1, wherein the sensor data further comprises one or more of a current drawn by the motor, a speed of the motor, or vibration information.

Example 3: The method, apparatus, and non-transitory computer-readable medium for motor control of Example 2, wherein the electronic control assembly is further configured to: determine, based on the sensor data, a detected application of the power tool, the detected application corresponding to at least one of: a type of fastener or a type of material on which the power tool is working; and control the motor based on the detected application.

Example 4: The method, apparatus, and non-transitory computer-readable medium for motor control of any of Examples 1 to 3, wherein the output indicates one or more of a position of the power tool or a seating status corresponding to the position.

Example 5: The method, apparatus, and non-transitory computer-readable medium for motor control of any of Examples 1 to 4, wherein the electronic control assembly is further configured to: receive, via the trigger, a distance threshold setting indication, wherein the distance threshold setting indication indicates to the electronic control assembly to set a predefined position of the power tool with respect to the object.

Example 6: The method, apparatus, and non-transitory computer-readable medium for motor control of Example 5, wherein the electronic control assembly is further configured to: determine, using the machine learning control program, that a position of the power tool is at the predefined position, wherein the output indicates that the position of the power tool was determined to be at the predefined position.

Example 7: The method, apparatus, and non-transitory computer-readable medium for motor control of Example 6, wherein controlling the motor based on the output comprises one or more of stopping the motor, pulsing the motor, reducing a speed of the motor.

Example 8: The method, apparatus, and non-transitory computer-readable medium for motor control of any of Examples 1 to 7, wherein controlling the motor based on the output comprises applying field weakening to the motor.

Example 9: The method, apparatus, and non-transitory computer-readable medium for motor control of any of Examples 1 to 8, wherein, to generate the sensor data, the sensor is configured to: emit a signal; and receive a reflection of the signal, wherein a time of flight of the signal from emission to reception indicates the distance of the power tool in relation to the object.

Example 10: The method, apparatus, and non-transitory computer-readable medium for motor control of any of Examples 1 to 9, wherein: the electronic control assembly includes an electronic processor that is configured to receive the sensor data from the sensor, provide the sensor data to the processor, receive the output from the processor, and control the motor; and a machine learning controller that includes the processor and the memory, wherein the memory stores the machine learning control program.

Example 11: The method, apparatus, and non-transitory computer-readable medium for motor control of any of Examples 1 to 10, wherein: the memory stores the machine learning control program, for the electronic control assembly to receive the sensor data from the sensor, the processor is configured to receive the sensor data from the sensor, and for the electronic control assembly to control the motor based on the output, the processor is configured to control the motor based on the output.

Example 12: The method, apparatus, and non-transitory computer-readable medium for motor control of any of Examples 1 to 11, wherein the machine learning control program includes a logistic regression model and wherein the processing the sensor data using the machine learning control program includes processing the sensor data with the logistic regression model.

Example 13: A method, apparatus, and non-transitory computer-readable medium for motor control comprises: a power tool comprising: a housing; a motor supported by the housing; a battery pack interface configured to receive a battery pack; a sensor supported by the housing and configured to generate sensor data associated with the power tool; and an electronic control assembly including a processor and a memory, the electronic control assembly supported by the housing and connected to the motor, wherein the electronic control assembly is configured to: receive the sensor data; process the sensor data, using a machine learning control program executed on the processor; determine, using the machine learning control program, a classification of a power tool operation based on the sensor data, the classification being selected from a predetermined set of potential classifications for the power tool operation; and control the motor with field weakening based on the classification.

Example 14: The method, apparatus, and non-transitory computer-readable medium for motor control of Example 13, wherein the classification comprises at least one of: an application type, a work material type, or a fastener type.

Example 15: The method, apparatus, and non-transitory computer-readable medium for motor control of Example 13 or 14, wherein the predetermined set of potential classification includes a high torque application type and a low torque application type, the high torque application type associated with a first torque level that is higher than a second torque level associated with the low torque application type, and wherein the classification is the high torque application type.

Example 16: The method, apparatus, and non-transitory computer-readable medium for motor control of Example 13 or 14, wherein the predetermined set of potential classification includes a hard work material type and a soft work material type, the hard work material type associated with a first work material that is harder than a second work material associated with the soft work material type, and wherein the classification is the hard work material type.

Example 17: The method, apparatus, and non-transitory computer-readable medium for motor control of Example 13 or 14, wherein the predetermined set of potential classification includes a first fastener type and a second fastener type, and wherein the classification is the first fastener type.

Example 18: The method, apparatus, and non-transitory computer-readable medium for motor control of any of Examples 13 to 17, wherein the sensor data comprises one or more of a current drawn by the motor, a speed of the motor, vibration information, or a distance with respect to an object.

Example 19: The method, apparatus, and non-transitory computer-readable medium for motor control of any of Examples 13 to 18, wherein the electronic control assembly is configured to: receive further sensor data from the sensor; process the further sensor data, using the machine learning control program executed on the processor; determine, using the machine learning control program, a further classification of a further power tool operation based on the further sensor data, the further classification being selected from the predetermined set of potential classifications for the power tool operation; and control the motor without field weakening based on the further classification.

Example 20: The method, apparatus, and non-transitory computer-readable medium for motor control of any of Examples 13 to 19, wherein, to control the motor with field weakening, the electronic control assembly is configured to one or more of: control the motor with an increased conduction angle, control the motor with phase advance, or control the motor with field oriented control and negative d-axis current injections.

Example 21: The method, apparatus, and non-transitory computer-readable medium for motor control of any of Examples 13 to 20, wherein the machine learning control program includes a logistic regression model and wherein, to process the sensor data, using the machine learning control program, the electronic control assembly is configured to process the sensor data with the logistic regression model.

Example 22: The method, apparatus, and non-transitory computer-readable medium for motor control of any of Examples 13 to 21, wherein the machine learning control program includes a logistic regression model and wherein the processing the sensor data using the machine learning control program includes processing the sensor data with the logistic regression model.

**Claims**

1. A power tool comprising:

   a housing;
   a trigger;
   a motor supported by the housing
   a battery pack interface configured to receive a battery pack;
   a sensor supported by the housing and configured to generate sensor data associated with the power tool, wherein the sensor data indicates a distance of the power tool in relation to an object; and
   an electronic control assembly including a processor and a memory, the electronic control assembly supported by the housing and connected to the motor, wherein the electronic control assembly is configured to:

      receive the sensor data;
      process the sensor data, using a machine learning control program executed on the processor;
      generate, using the machine learning control program, an output based on the sensor data; and
      control the motor based on the output.

2. The power tool of claim 1, wherein the sensor data further comprises one or more of a current drawn by the motor, a speed of the motor, or vibration information.

3. The power tool of claim 2, wherein the electronic control assembly is further configured to:

      determine, based on the sensor data, a detected application of the power tool, the detected application corresponding to at least one of: a type of fastener or a type of material on which the power tool is working; and
      control the motor based on the detected application.

4. The power tool of claim 1, claim 2 or claim 3, wherein the output indicates one or more of a position of the power tool or a seating status corresponding to the position.

5. The power tool of claim 1 or of any of claims 2 to 4, wherein the electronic control assembly is further configured to: receive, via the trigger, a distance threshold setting indication, wherein the distance threshold setting indication indicates to the electronic control assembly to set a predefined position of the power tool with respect to the object.

6. The power tool of claim 5, wherein the electronic control assembly is further configured to: determine, using the machine learning control program, that a position of the power tool is at the predefined position, wherein the output indicates that the position of the power tool was determined to be at the predefined position; and, optionally or preferably, wherein controlling the motor based on the output comprises one or more of stopping the motor, pulsing the motor, reducing a speed of the motor.

7. The power tool of claim 1 or of any of claims 2 to 6, wherein controlling the motor based on the output comprises applying field weakening to the motor.

8. The power tool of claim 1 or of any of claims 2 to 7, wherein, to generate the sensor data, the sensor is configured to:

    emit a signal; and
    receive a reflection of the signal, wherein a time of flight of the signal from emission to reception indicates the distance of the power tool in relation to the object.

9. The power tool of claim 1 or of any of claims 2 to 8, wherein:

    the electronic control assembly includes
    an electronic processor that is configured to receive the sensor data from the sensor, provide the sensor data to the processor, receive the output from the processor, and control the motor; and
    a machine learning controller that includes the processor and the memory, wherein the memory stores the machine learning control program.

10. The power tool of claim 1 or of any of claims 2 to 9, wherein:

    the memory stores the machine learning control program,
    for the electronic control assembly to receive the sensor data from the sensor, the processor is configured to receive the sensor data from the sensor, and
    for the electronic control assembly to control the motor based on the output, the processor is configured to control the motor based on the output.

11. A method of operating a power tool, the method comprising:

    generating, by a sensor of the power tool, sensor data associated with the power tool, wherein the sensor data indicates a distance of the power tool in relation to an object;
    receiving, by an electronic control assembly of the power tool, the sensor data, the electronic control assembly including a memory and a processor configured to execute instructions stored on the memory;
    processing, by the electronic control assembly, the sensor data using a machine learning control program executed on the electronic control assembly;
    generating, using the machine learning control program, an output based on the sensor data; and
    controlling, by the electronic control assembly, a motor of the power tool based on the output.

12. The method of claim 11, wherein the sensor data further comprises one or more of a current drawn by the motor, a speed of the motor, or vibration information.

13. The method of claim 11 or claim 12, further comprising:

    determining, based on the sensor data, a detected application of the power tool, the detected application corresponding to at least one of: a type of fastener or a type of material on which the power tool is working; and
    controlling the motor based on the detected application.

14. The method of claim 11, claim 12 or claim 13, wherein the output indicates one or more of a position of the power tool or a seating status corresponding to the position.

15. The method of claim 11, or of any of claims 12 to 14, wherein the machine learning control program includes a logistic regression model and wherein the processing the sensor data using the machine learning control program includes processing the sensor data with the logistic regression model.

FIG. 1

# FIG. 2

EP 4 588 620 A1

FIG. 3

320

305

MACHINE LEARNING CONTROLLER

510

300

EXTERNAL DEVICE 107

435

MACHINE LEARNING CONTROLLER

320

310

430

425

NETWORK

315

EP 4 588 620 A1

## FIG. 4A

EXTERNAL DEVICE 107

MACHINE LEARNING CONTROLLER

NETWORK

400

405

410

420

435

430

425

510

EP 4 588 620 A1

# FIG. 4B

MACHINE
LEARNING
CONTROLLER

## FIG. 4C

EXTERNAL DEVICE
107

MACHINE
LEARNING
CONTROLLER

460

450

455

1502

510

FIG. 4D

475

485

MACHINE
LEARNING
CONTROLLER

480

EP 4 588 620 A1

**FIG. 5A**

*FIG. 5B*

ELECTRONIC CONTROL ASSEMBLY — 536

MACHINE LEARNING CONTROLLER — 540

ELECTRONIC PROCESSOR — 575

MEMORY — 580

MACHINE LEARNING CONTROL — 585

ELECTRONIC PROCESSOR — 550

# FIG. 6

600

ACCESS TOOL DATA
PREVIOUSLY COLLECTED — 605

BUILD AND TRAIN MACHINE
LEARNING CONTROL — 610

STORE MACHINE
LEARNING CONTROL — 615

OPERATE TOOL ACCORDING TO
MACHINE LEARNING CONTROL — 620

# FIG. 7

700

```
┌─────────────────────────┐
│  RECEIVE TRIGGER SIGNAL  │── 705
└─────────────────────────┘
             │
             ▼
┌─────────────────────────┐
│  RECEIVE SENSOR SIGNALS  │── 710
└─────────────────────────┘
             │
             ▼
┌─────────────────────────┐
│   INPUT SENSOR SIGNALS TO│── 715
│ MACHINE LEARNING CONTROLLER│
└─────────────────────────┘
             │
             ▼
┌─────────────────────────┐
│   GENERATE OUTPUT FROM   │── 720
│ MACHINE LEARNING CONTROLLER│
└─────────────────────────┘
             │
             ▼
┌─────────────────────────┐
│   OPERATE MOTOR BASED ON │
│    OUTPUT FROM MACHINE   │── 725
│   LEARNING CONTROLLER    │
└─────────────────────────┘
```

FIG. 8

*FIG. 9*

900

905

910

915

920

```
NUMBER OF          CURRENT        MAGNITUDE OF      DISTANCE
ROTATIONS                          VIBRATION
(RPM)
```

CLASSIFIER OR
REGRESSION
(DECISION TREE, SVM,          540
KNN, NN, LOGISTIC
REGRESSION, ETC.)

925

OUTPUT

FIG. 10

1000

**Logistic Regression**

EP 4 588 620 A1

# FIG. 11

1100

RECEIVE TRIGGER SIGNAL — 1105

RECEIVE SENSOR DATA — 1110

INPUT SENSOR DATA INTO MACHINE LEARNING CONTROLLER — 1115

IDENTIFY APPLICATION BASED ON OUTPUT FROM MACHINE LEARNING CONTROLLER — 1120

CHANGE OPERATION OF TOOL BASED ON IDENTIFIED APPLICATION — 1125

# FIG. 12

1200

RECEIVE TRIGGER SIGNAL — 1205

RECEIVE SENSOR DATA — 1210

INPUT SENSOR DATA INTO MACHINE LEARNING CONTROLLER — 1215

IDENTIFY FASTENER BASED ON OUTPUT FROM MACHINE LEARNING CONTROLLER — 1220

CHANGE OPERATION OF TOOL BASED ON IDENTIFIED FASTENER — 1225

# FIG. 13

1300

RECEIVE TRIGGER SIGNAL — 1305

RECEIVE SENSOR DATA — 1310

INPUT SENSOR DATA INTO
MACHINE LEARNING CONTROLLER — 1315

IDENTIFY MATERIAL BASED ON
OUTPUT FROM MACHINE
LEARNING CONTROLLER — 1320

CHANGE OPERATION OF TOOL
BASED ON IDENTIFIED MATERIAL — 1325

FIG. 14

EP 4 588 620 A1

## FIG. 15

1500

| SET DISTANCE THRESHOLD | — 1505 |

↓

| RECEIVE TRIGGER SIGNAL | — 1510 |

↓

| RECEIVE SENSOR DATA | — 1515 |

↓

| INPUT SENSOR DATA INTO MACHINE LEARNING CONTROLLER | — 1520 |

↓

| DETERMINE POSITION BASED ON OUTPUT OF MACHINE LEARNING CONTROLLER | — 1525 |

↓

| CHANGE OPERATION OF TOOL BASED ON DETERMINED POSITION | — 1530 |

**EP 4 588 620 A1**

Europäisches Patentamt
European Patent Office
Office européen des brevets

# EUROPEAN SEARCH REPORT

**Application Number**

EP 25 15 2946

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/240145 A1 (ABBOTT JONATHAN E [US]) 5 August 2021 (2021-08-05) * paragraph [0002] - paragraph [0052] * * paragraph [0088] - paragraph [0146] * * figures * | 1-15 | INV. B25F5/00 |
| X | US 11 845 173 B2 (MILWAUKEE ELECTRIC TOOL CORP [US]) 19 December 2023 (2023-12-19) * claims; figures * | 1,2, 10-12 | |
| A | WO 2022/171444 A1 (BOSCH GMBH ROBERT [DE]) 18 August 2022 (2022-08-18) * page 1 - page 17 * * figures * | 1-15 | |
| A | US 2023/073490 A1 (DIETER CHRISTOPH [DE] ET AL) 9 March 2023 (2023-03-09) * paragraph [0001] * * paragraph [0004] - paragraph [0008] * * figures * | 1-15 | |

TECHNICAL FIELDS SEARCHED (IPC)

B25F

The present search report has been drawn up for all claims

| Place of search | Date of completion of the search | Examiner |
|---|---|---|
| The Hague | 3 June 2025 | van Woerden, N |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 15 2946

This annex lists the patent family members relating to the patent documents cited in the above-mentioned European search report.
The members are as contained in the European Patent Office EDP file on
The European Patent Office is in no way liable for these particulars which are merely given for the purpose of information.

03-06-2025

| Patent document cited in search report | Publication date | Patent family member(s) | | Publication date |
|---|---|---|---|---|
| US 2021240145 A1 | 05-08-2021 | CN | 115427897 A | 02-12-2022 |
| | | EP | 4097544 A1 | 07-12-2022 |
| | | US | 2021240145 A1 | 05-08-2021 |
| | | US | 2024393752 A1 | 28-11-2024 |
| | | WO | 2021155156 A1 | 05-08-2021 |
| US 11845173 B2 | 19-12-2023 | CN | 220218269 U | 22-12-2023 |
| | | EP | 4228859 A1 | 23-08-2023 |
| | | US | 2022118595 A1 | 21-04-2022 |
| | | US | 2024123596 A1 | 18-04-2024 |
| | | WO | 2022081945 A1 | 21-04-2022 |
| WO 2022171444 A1 | 18-08-2022 | DE | 102021201341 A1 | 18-08-2022 |
| | | EP | 4291360 A1 | 20-12-2023 |
| | | WO | 2022171444 A1 | 18-08-2022 |
| US 2023073490 A1 | 09-03-2023 | DE | 102019216038 A1 | 22-04-2021 |
| | | EP | 4045232 A1 | 24-08-2022 |
| | | US | 2023073490 A1 | 09-03-2023 |
| | | WO | 2021073791 A1 | 22-04-2021 |

EPO FORM P0459

For more details about this annex : see Official Journal of the European Patent Office, No. 12/82

**REFERENCES CITED IN THE DESCRIPTION**

**Patent documents cited in the description**

- US 63622837